# EUROPEAN PATENT SPECIFICATION

(11) **EP 4 111 350 B1**
(45) Date of publication and mention of the grant of the patent: **11.12.2024**
(21) Application number: 21729085.7
(22) Date of filing: 29.04.2021
(51) Int. Cl.: H04L 9/40, G06F 21/64, H04L 9/32, H04W 12/06, H01M 10/42, H04L 9/06

(54) **SECURE WIRELESS PROTOCOL FOR WIRELESS SENSOR NETWORKS**
SICHERES DRAHTLOSES PROTOKOLL FÜR DRAHTLOSE SENSORNETZWERKE
PROTOCOLE SANS FIL SÉCURISÉ POUR DES RÉSEAUX DE CAPTEURS SANS FIL

(30) Priority: 30.04.2020 US 202063018135 P
(43) Date of publication of application: 04.01.2023
(73) Proprietor: Sensata Technologies, Inc., Attleboro, MA 02703 (US)
(72) Inventor: RIGELSFORD, Jonathan M., Attleboro, Massachusetts 02703 (US); ESPAILLAT, Luis, Attleboro, Massachusetts 02703 (US); PARTIS, Gary J., Attleboro, Massachusetts 02703 (US)
(74) Representative: FRKelly
(86) International application number: PCT/US2021/030015
(87) International publication number: WO 2021/222662

(56) References cited:
- RAHMAN ATAUR ET AL: "Wireless Battery Management System of Electric Transport", IOP CONFERENCE SERIES: MATERIALS SCIENCE AND ENGINEERING, vol. 260, 8 November 2017 (2017-11-08), GB, pages 012029, XP055825427, ISSN: 1757-8981, Retrieved from the Internet <URL:http://stacks.iop.org/1757-899X/260/i=1/a=012029?key=crossref.3af67abb80ad2f36c0bef448ccbac8ac> [retrieved on 20210719], DOI: 10.1088/1757-899X/260/1/012029
- "Chapter 9: ED - Menezes A J; Van Oorschot P C; Vanstone S A", 1 October 1996 (1996-10-01), XP001525009, ISBN: 978-0-8493-8523-0, Retrieved from the Internet <URL:http://www.cacr.math.uwaterloo.ca/hac/> [retrieved on 20210719]

## Description

### BACKGROUND ART

Electric vehicles are powered by high voltage battery systems including multiple cells. Battery management systems are used to monitor various attributes of the cells, including voltage, temperature, and current, in order to ensure proper and safe operation of the battery. In a conventional wired battery management system, multiple cells of the battery are grouped into modules, with each module having a component to monitor these attributes. Each of these components is wired to a central controller. Problems caused by this solution include lack of flexibility in pack design, wasted space due to connectors and cabling inside the battery pack, and increased challenges for battery second life usage. Though wireless technologies may be used to connect battery monitoring components to a central controller, these wireless technologies are vulnerable to interference from other systems or malicious parties and are also vulnerable to cyber-attacks.

### SUMMARY OF INVENTION

The invention is defined in the independent claims. Particular embodiments are set out in the dependent claims.

Methods, systems, apparatuses, and computer program products for using a secure wireless protocol within a wireless battery management system are disclosed. In a particular embodiment, using a secure wireless protocol within a wireless battery management system includes a first wireless component of the BMS determining a first freshness value based on a freshness value counter. In this embodiment, the first wireless component generates a message body comprising the first freshness value and a data payload. The first wireless component then uses a first session key shared with a second wireless component of the BMS, to encrypt the message body and generate a message authentication code based on the encrypted message body and the first session key. The first wireless component transmits to the second wireless component, a message that includes the encrypted message body and the message authentication tag. As will be explained below, the second wireless component also has a copy of the first session key and is able to use the first session key to decrypt and authenticate the message. Furthermore, the first wireless component may use the freshness value in the message to determine whether the data in the message is fresh.

In another embodiment, using a secure wireless protocol within a wireless battery management system includes a second wireless component of the BMS receiving from a first wireless component of the BMS, a first message that includes an encrypted message body and a message authentication tag. In this embodiment, the second wireless component identifies a first session key shared with the first wireless component and uses the first session key to authenticate the message authentication tag and decrypt the encrypted message body to generate a message body that includes a first freshness value. Based on a freshness value counter, the second wireless component determines a second freshness value for the first message. In this embodiment, the second wireless component may determine whether data in the first message is fresh by determining whether the first freshness value matches the second freshness value.

As will be explained below, the secure wireless protocol uses encryption, authentication, and freshness values to produce a secure means of communicating messages over an unsecured wireless transmission medium in a battery management system. By using a freshness values and message authentication codes, the wireless sensor network may prevent replay attacks where legitimate signals are captured, recorded, and replayed verbatim to correct normal operation of the network. Performance of the wireless battery management system may also be improved by preventing replay attacks by exchanging session keys in response to freshness value overflows. An additional benefit of at least one embodiment of the present invention is that the performance of the wireless battery management system may be improved by preventing 'man in the middle' attacks using authenticated key exchange at the beginning of a session.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF DRAWINGS

FIG. 1 sets forth a block diagram of a system for using a secure wireless protocol within a wireless battery management system according to at least one embodiment of the present invention;
FIG. 2 illustrates a block diagram of a module monitoring system for using a secure wireless protocol within a wireless battery management system according to at least one embodiment of the present invention;
FIG. 3 illustrates a block diagram of a wireless network controller for using a secure wireless protocol within a wireless battery management system according to at least one embodiment of the present invention;
FIG. 4 illustrates an exchange of keys for using a secure wireless protocol within a wireless battery management system according to at least one embodiment of the present invention;
FIG. 5A illustrates an exchange of keys when a freshness value overflows in a wireless sensor network having a secure wireless protocol according to at least one embodiment of the present invention;
FIG. 5B illustrates an exchange of keys without freshness value overflow in a wireless sensor network having a secure wireless protocol according to at least one embodiment of the present invention;
FIG. 6 sets forth a flowchart to illustrate an implementation of a method for using a secure wireless protocol within a wireless battery management system according to at least one embodiment of the present invention;
FIG. 7 sets forth a flowchart to illustrate an implementation of a method for using a secure wireless protocol within a wireless battery management system according to at least one embodiment of the present invention;
FIG. 8 sets forth a flowchart to illustrate an implementation of a method for using a secure wireless protocol within a wireless battery management system according to at least one embodiment of the present invention;
FIG. 9 sets forth a flowchart to illustrate an implementation of a method for using a secure wireless protocol within a wireless battery management system according to at least one embodiment of the present invention;
FIG. 10 sets forth a flowchart to illustrate an implementation of a method for using a secure wireless protocol within a wireless battery management system according to at least one embodiment of the present invention;
FIG. 11 sets forth a flowchart to illustrate an implementation of a method for using a secure wireless protocol within a wireless battery management system according to at least one embodiment of the present invention;
FIG. 12 sets forth a flowchart to illustrate an implementation of a method for using a secure wireless protocol within a wireless battery management system according to at least one embodiment of the present invention;
FIG. 13 sets forth a flowchart to illustrate an implementation of a method for using a secure wireless protocol within a wireless battery management system according to at least one embodiment of the present invention;
FIG. 14 sets forth a flowchart to illustrate an implementation of a method for using a secure wireless protocol within a wireless battery management system according to at least one embodiment of the present invention;
FIG. 15 sets forth a flowchart to illustrate an implementation of a method for using a secure wireless protocol within a wireless battery management system according to at least one embodiment of the present invention;
FIG. 16 sets forth a flowchart to illustrate an implementation of a method for using a secure wireless protocol within a wireless battery management system according to at least one embodiment of the present invention;
FIG. 17 sets forth a flowchart to illustrate an implementation of a method for using a secure wireless protocol within a wireless battery management system according to at least one embodiment of the present invention;
FIG. 18 sets forth a flowchart to illustrate an implementation of a method for using a secure wireless protocol within a wireless battery management system according to at least one embodiment of the present invention;
FIG. 19 sets forth a flowchart to illustrate an implementation of a method for using a secure wireless protocol within a wireless battery management system according to at least one embodiment of the present invention;
FIG. 20 sets forth a flowchart to illustrate an implementation of a method for using a secure wireless protocol within a wireless battery management system according to at least one embodiment of the present invention;
FIG. 21 sets forth a flowchart to illustrate an implementation of a method for using a secure wireless protocol within a wireless battery management system according to at least one embodiment of the present invention; and
FIG. 22 sets forth a flowchart to illustrate an implementation of a method for using a secure wireless protocol within a wireless battery management system according to at least one embodiment of the present invention.

### DESCRIPTION OF EMBODIMENTS

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B, as well as A and B. An alternative wording for the same combinations is "at least one of A and B". The same applies for combinations of more than two elements.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

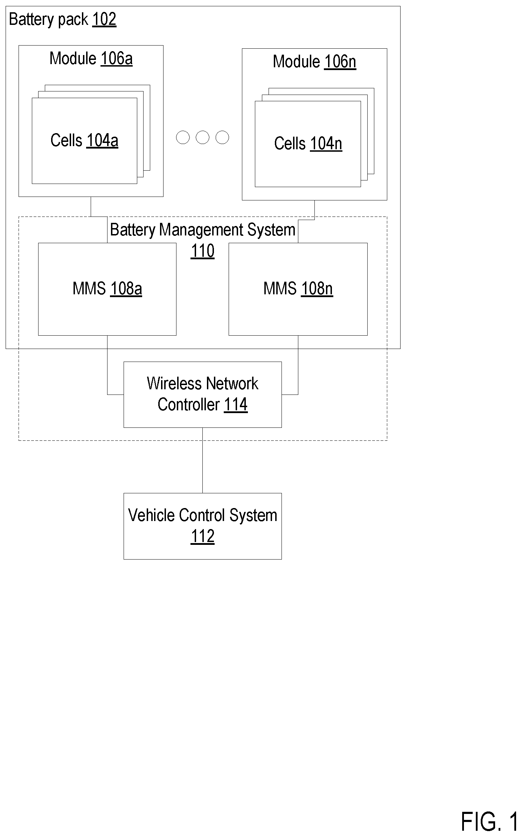

FIG. 1 sets forth a diagram of a system for using a secure wireless protocol within a wireless battery management system according to at least one embodiment of the present invention. Although the following discussion presents the secure wireless protocol for wireless sensor networks in the context of a wireless battery management system, it is understood that the approaches set forth herein may be applied to any wireless sensor network (e.g., a network comprising one or more wireless sensing nodes configured to transmit sensor data to a wireless network controller over a wireless network connection). The system of FIG. 1 includes a battery pack (102), such as a high voltage battery for use in an electric vehicle. The battery pack (102) includes a plurality of cells (104a-n), such as Lithium-ion (Li-ion) cells. The cells (104a-n) are grouped into modules (106a-n) such that each module (106a-n) comprises a corresponding subset of the cells (104a-n). The cells (104a-n) may be physically grouped into modules (106a-n) using a casing, chassis, or other enclosure. The cells (104a-n) may also be logically grouped into modules (106a-n) by virtue of distinct groupings of cells (104a-n) being monitored by a distinct module monitoring system (108a-n), as will be described below.

The system also includes a battery management system (110). The battery management system (110) monitors various attributes of the cells (104a-n) and provides battery sensor data indicating these attributes to a vehicle control system (112). The battery management system (110) includes a plurality of module monitoring systems (MMS) (108an). Each MMS (108a-n) is configured to monitor a corresponding module (106a-n) of cells (104a-n). For example, each module (106a-n) may have a MMS (108a-n) attached to a chassis, base, tray, or other mechanism holding the cells (104a-n) of the module (106a-n). Each MMS (108a-n) includes sensors to measure various attributes of the cells (104a-n) of its corresponding module (106a-n). Such attributes may include voltage, current, temperature, and potentially other attributes. The attributes are indicated in battery sensor data generated by the MMS (108a-n).

Each MMS (108a-n) encodes its battery sensor data for transmission as a wireless signal and transmits its battery sensor data to a wireless network controller (WNC) (114) (e.g., a 2.4Ghz wireless channel). The WNC (114) then sends the battery sensor data received from the MMSes (108a-n) to a vehicle control system (VCS) (112) using a wired or wireless communications channel. The VCS (112) may include a central "computer" of a vehicle. The VCS (112) may be a central control unit or may refer collectively to one or more vehicle subsystems.

As data is transmitted between each MMS (108a-n) and the WNC (114) using a wireless network connection, a security policy is implemented to ensure that data transmitted over the wireless communications channel is secure and that the data cannot be tampered with or falsified. Accordingly, messages sent over the wireless communications channel between the MMS (108a-n) and the WNC (114) each include a header comprising an MMS identifier (e.g., a logical address or identifier assigned to each MMS (108a-n) and a wireless subnet identifier to allow for multiple wireless networks to coexist.

Each message also includes a main message body. In some embodiments, the main message body of the message is an integer multiple of 16 bytes/octets for efficient encryption. The main body comprises a freshness value (FV). In some embodiments, the FV is 24-32 bits. The FV is incremented in each transmission to prevent replay attacks, where legitimate signals are captured, recorded, and replayed verbatim to corrupt normal operation of the network. The main body also includes a data payload comprising instructions from the WNC (114), or responses (e.g., sensor data) from an MMS (108a-n). In some embodiments, the main body of the message is encrypted as a ciphertext.

Each message may also include a message authentication tag. In some embodiments, the message authentication tag includes a cipher-based message authentication code (CMAC) to provide assurance of the authenticity of the data (e.g., as specified by NIST 800-38B and NIST RFC4493, or another standard).

Referring back to the MMS ID of the message header, each MMS (108a-n) may have a unique serial number programmed into it during manufacture. During the battery pack (102) configuration process, while the WNC (114) is forming the wireless network, each MMS (108a-n) may be allocated a sequential identity (e.g. a logical address), thereby simplifying network control.

The wireless subnet ID may be a network identifier used in the radios or transceivers of the MMSs (108a-n). Thus, multiple networks can co-exist by filtering and rejecting messages which are not on the same subnet ID. This improves and simplifies message handling but it may not prevent unwanted interference from adjacent wireless networks.

In some embodiments, the MMS ID and the wireless subnet ID are sent in plaintext (e.g., not encrypted) so that the wireless network between MMSs (108a-n) and the WNC (114) can operate reliably. In some embodiments, the CMAC appended to the end of the message is calculated using the main message body of the message (FV and data payload) and this plaintext header information, as otherwise an attacker could change the header but still send an authenticated message. For example, Additional Authenticated Data (AAD) is appended to the ciphertext but not encrypted. The AAD may also be used in calculating the message authentication tag. The AAD is bound to the ciphertext in the sense that it cannot be changed or separated due to the authentication tag. Thus, the CMAC is computed over both the AAD and the ciphertext (e.g., the encrypted message body). The AAD ensures authenticity of data, and increases the data payload in the message body.

With respect to the message body, in some embodiments, the FV is implemented as a monotonic counter to enable efficient synchronization between sender and receiver. A session key used to generate the message authentication code (e.g., the CMAC) is updated when the freshness counter overflows in order to prevent replay attacks. For example, for a 32-bit FC, assuming one message per 20ms of a data cycle, the FV would not overflow for 23861 hours (994 days), which is likely sufficient for no further updates within a single session. Multiple messages may be sent per cycle. For example, where five messages are sent per 20ms cycle, the FV counter would not overflow for 198 days. In a particular embodiment of a 24-bit FV, the FV counter would last up to 93.2 hours (3.8 days) at one message per cycle and 18.6 hours for five messages per cycle. Smaller FVs may be impractical as they may expire too quickly. Moreover, each additional 8-bits used to represent the FV reduces the available data payload by an equal amount. In embodiments implementing a Galois Counter Mode (GCM) CMAC, the FV can be incorporated into the GCM initialization vector (IV), thereby reducing the data payload.

In a particular embodiment, the message authentication tag (e.g., message authentication code) comprises a cipher-based message authentication code (e.g., based on the encrypted main body; based on the encrypted main body and AAD) to provide assurance of the authenticity of the data (e.g. as specified by NIST RFC4493). In some embodiments, an authenticated encryption mode such as AES CCM or GCM is used to encrypt the message body. In embodiments in which AAD is used, the AAD helps solve the problem of how the WNC (114) will determine from a received encrypted packet which MMS (108a-n) sent the packet, in order to select the correct session key to verify the MAC authentication tag and decrypt the data payload.

In embodiments implementing a GCM based CMAC, the CMAC may be truncated from 128 bits (16 bytes/octets) to 64 bits (8 bytes/octets) while complying with Table 2, Appendix C in NIST 800-38D. A smaller 32 bit (4 byte/octet) may not be suitable where a maximum packet size (<27 bytes) is used, as the GCM session key would need to be updated after every 218 invocations. This may create the risk of new keys to be generated and exchanged during a session (e.g., during driving of a vehicle), resulting in an increase in bandwidth that may not be supported.

In some embodiments, prior to secured communication between the MMSs (108a-n) and WNC (114), the WNC (114) and MMSs (108a-n) exchange cryptographic keys. Public keys can be exchanged without security. In a particular embodiment, keys for the authenticated encryption method and MAC authentication tag calculation should be unique at least per BMS instance, to avoid "attack one, break all" scenarios. Moreover, such keys may be updated/changed with an FV overflow to avoid repeat messages.

In some embodiments, each MMS (108a-n) and WNC (114) is provisioned with a unique long-term key during production, which is then used to generate further short term session keys for different purposes. This hierarchy of keys with defined uses allows the system to control the use of keys and handle cases of compromise of keys.

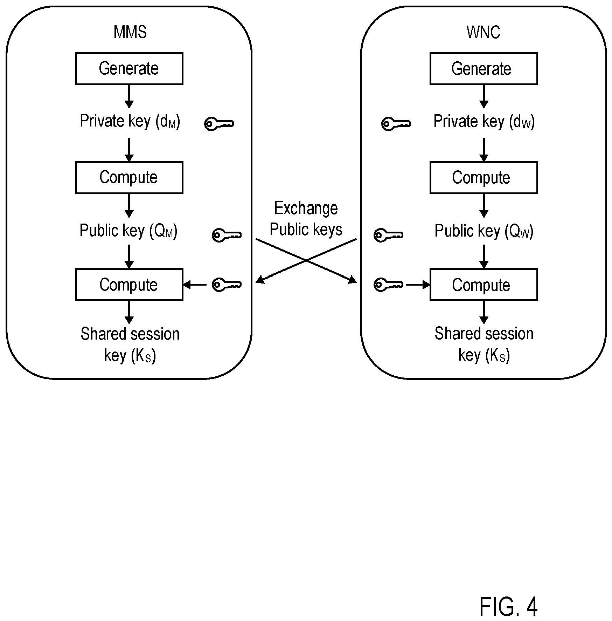

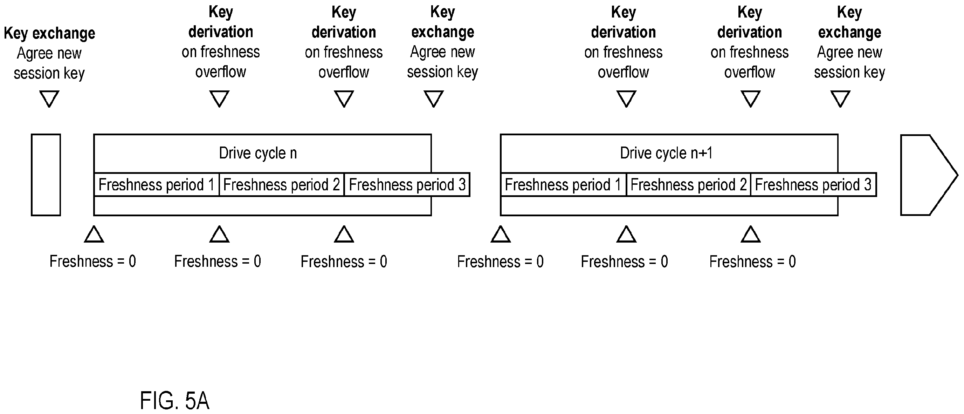

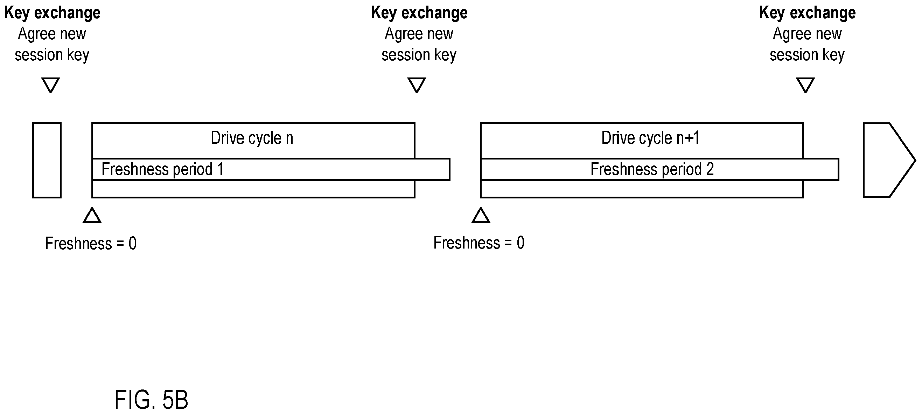

A key agreement protocol can be used between each pair of MMS (108a-n) and WNC (114) to derive a session key from the respective module's unique long-term keys. An algorithm such as Diffie-Hellman key exchange can be used to derive this without having to exchange the long-term keys over the wireless channel. The algorithm must be specified carefully to avoid known weaknesses such as man-in-the-middle attacks, which the original Diffie-Hellman algorithm is susceptible to. An approach based on authenticated Elliptic Curve Diffie Hellman (ECDH) according to (NIST 800-56A) may be used, as shown in FIG. 4. The agreed session key will remain in use for the session (e.g., a whole drive cycle or power cycle) and a new key agreed for the next session. However, to avoid replay attacks, it may be necessary to update the session key whenever the freshness value overflows. In this case, the session key does not need to be renegotiated using a key exchange but can instead be locally updated using a fast key derivation function (KDF) which may be based on hash functions or block ciphers such as AES, in accordance with NIST 800-108. In this embodiment, the KDF may modify the session key in a deterministic way, which is sufficient to meet the requirement to ensure repeating freshness values use a different key. An example flow for key exchange when a freshness value overflows is shown at FIG. 5A. An example flow for key exchange without freshness value overflow is shown at FIG. 5B.

As with all forms of Diffie-Hellman, ECDH is susceptible to man-in-the-middle attacks if used without authenticating the communicating parties (i.e. MMS (108a-n) and WNC (114)). This means that an attacker could intercept the public keys in the wireless channel and modify them before sending the modified keys to the MMS (108a-n) and WNC (114). To avoid this, the communicating nodes may mutually authenticate each other, to ensure the received public key comes from the known sender.

In wireless protocols such as Bluetooth 5, this is achieved through the pairing mechanisms which involve the user in the authentication process. For the wireless battery management system, the user cannot be involved, so Elliptic Curve Digital Signature Algorithm (ECDSA) digital signatures can instead be used to provide authentication. For example, an additional static keypair is required in each WNC (114) and MMS (108a-n), which may be used to compute an ECDSA signature of the public keys before they are transmitted. The signature may then be transmitted along with the public key and verified by the receiving node.

A resilient key management strategy for the session keys may include:
- To prevent man-in-the-middle attacks on the session key establishment process, an authenticated ECDH key exchange (NIST 800-56A) may be carried out by the WNC and MMS prior to the start of each drive cycle.
- The authenticated key exchange requires asymmetric key pairs to be provisioned in the WNC and MMS. This provisioning may be done in a secure environment during production.
- Within the drive cycle, the session key may be updated using a local AES or hash-based key derivation function (KDF) each time the freshness value overflows. A hash-based KDF should be implemented. This approach also has the advantage that the freshness values do not need to be maintained in non-volatile memory between sessions, they can be simply initialized to zero at the start of each cycle and maintained in RAM.

In some embodiments, initial key exchange needs occurs during system configuration in the factory/battery pack assemblers. When the battery pack is in service mode time and data bandwidth are not as critical as in normal operation. The relevant cryptographic keys may then be in place and ready for use when the vehicle is started (key-on) and the drive cycle starts. Key exchange may be repeated after key-off and before the system shuts down so that the new keys are in place ready for the next key-on and new drive cycle. By ensuring that new keys are in place before the next drive cycle, this method eliminates the radio data bandwidth and time delay which would naturally occur if keys were exchanged immediately after key-on at the start of the drive cycle. Vehicle manufactures may implement stringent constraints on how quickly a vehicle should be fully operational after a key-on event.

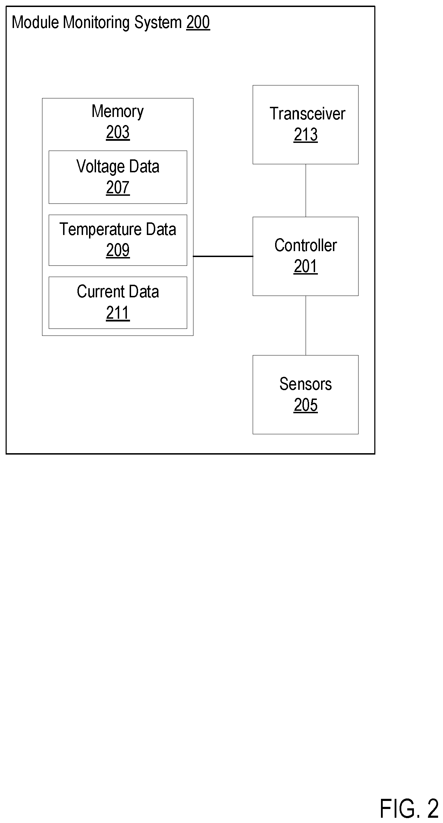

For further explanation, FIG. 2 sets forth a block diagram of a module monitoring system (MMS) (200) (e.g., a module monitoring system (108a-n) of FIG. 1) for use in a wireless sensor network having a secure wireless protocol according to embodiments of the present disclosure. The MMS (200) includes a controller (201) coupled to a memory (203). The controller (201) is configured to obtain sensor readings from sensors (205) (e.g., voltage sensors, temperature sensors, current sensors) to generate battery sensor data (e.g., voltage data (207), temperature data (209), current data (211)). The controller (201) may include or implement a microcontroller, an Application Specific Integrated Circuit (ASIC), a digital signal processor (DSP), a programmable logic array (PLA) such as a field programmable gate array (FPGA), or other data computation unit in accordance with the present disclosure. The battery sensor data (e.g., voltage data (207), temperature data (209), current data (211)) may be stored in the memory (203). The memory (203) may be a non-volatile memory such as flash memory.

The sensors (205) are configured to measure attributes (e.g., voltage, temperature, current) of cells of a module (e.g., cells (104a-n) of a module (106a-n)) on which the MMS (200) is installed. For bidirectional wireless communication with a wireless network controller (e.g., a WNC (114) of FIG. 1), the MMS (200) includes a transceiver (213) coupled to the controller (201).

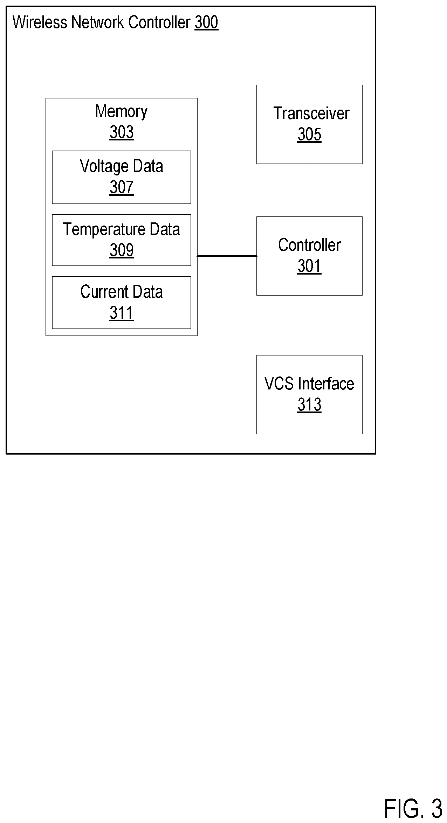

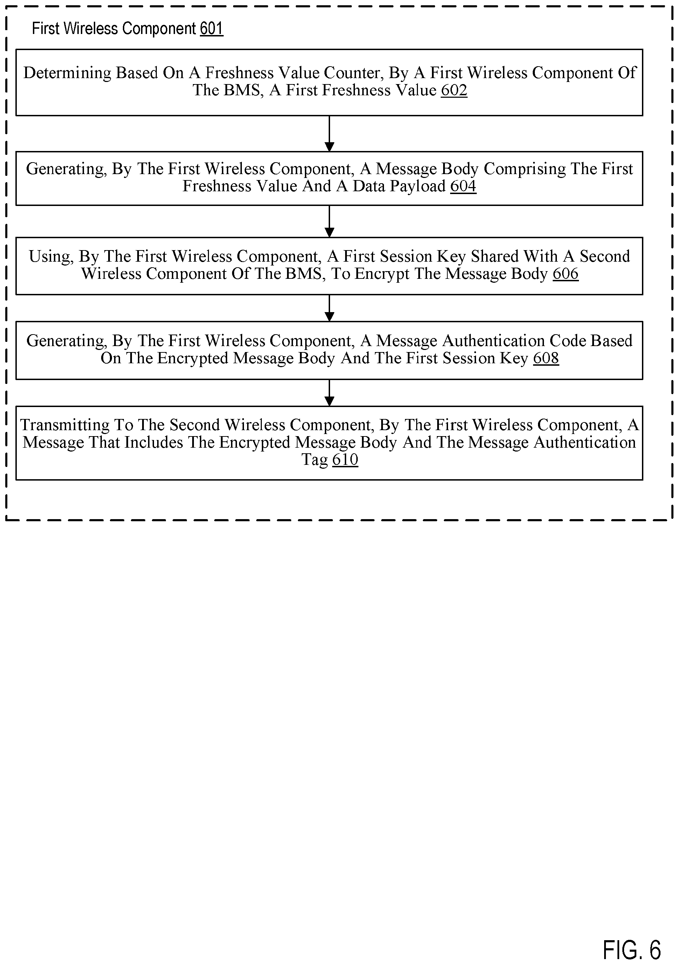

For further explanation, FIG. 3 sets forth a block diagram of a wireless network controller (WNC) (300) (e.g., a wireless network controller (114) of FIG. 1) for use in a wireless sensor network having a secure wireless protocol according to embodiments of the present disclosure. The WNC (300) includes a controller (301) coupled to a memory (303). The controller (301) is configured to request and receive, via a transceiver (305) from a plurality of MMSs (200), sensor data (e.g., voltage data (307), temperature data (309), current data (311)). The controller (301) may include or implement a microcontroller, an Application Specific Integrated Circuit (ASIC), a digital signal processor (DSP), a programmable logic array (PLA) such as a field programmable gate array (FPGA), or other data computation unit in accordance with the present disclosure. The battery sensor data (e.g., voltage data (307), temperature data (309), current data (311)) may be stored in the memory (303). The memory (303) may be a non-volatile memory such as flash memory. The controller (301) is further configured to provide formatted battery sensor data to a BMS controller (e.g., a BMS controller (412) of FIG. 6) or a vehicle control system (e.g., a VCS (112) of FIG. 1) via an interface (313). The interface may include a bus or other wired connection to a BMS controller or VCS.

For further explanation, FIG. 6 sets forth a flowchart to illustrate an implementation of a method for using a secure wireless protocol within a wireless battery management system according to at least one embodiment of the present invention. The method of FIG. 6 includes determining (602) based on a freshness value counter, by a first wireless component (601) of the battery management system, a first freshness value. A battery management system (BMS) is a system that is used to monitor and manage an electric battery. In particular embodiments, a BMS may include a wireless network controller that communicates with a plurality of module monitoring system (MMS), each of which monitors a plurality of cells of a battery. In the example of FIG. 6, the first wireless component (601) may be a wireless network controller or a module monitoring system of a BMS. According to at least one embodiment of the present invention, the MMSs and the WNC may include a freshness value in messages. In this example embodiment, the transmitting component and the receiving component may each have a freshness value counter that is incremented for each message until the freshness value counter overflows. This is to ensure that the same message data is not sent more than once, therefore allowing an attacker to playback previously captured packets. The freshness value counter may be implemented as a monotonic counter to enable efficient synchronization of the freshness value between the sender and the receiver. As will be explained in more detail below, updating the session key when the freshness value counter overflows and is reset, prevents the attacker from replaying the same packets again. Determining (602) based on a freshness value counter, by a first wireless component (601) of the BMS, a first freshness value may be carried out by retrieving a value from a freshness counter that is incremented for each message.

The method of FIG. 6 also includes generating (604), by the first wireless component (601), a message body comprising the first freshness value and a data payload. Depending on whether the first wireless component is a MMS or a WNC, the data payload may include instructions for a MMS or responses from the MMS. In a particular embodiment in which the first wireless component is a MMS, the data payload includes sensor readings of characteristics (e.g., voltage, temperature, current) of the cells in the battery. Generating (604), by the first wireless component (601), a message body comprising the first freshness value and a data payload may be carried out by positioning the first freshness value and the data payload together.

In addition, the method of FIG. 6 includes using (606), by the first wireless component (601), a first session key shared with a second wireless component of the BMS, to encrypt the message body. A session key is a key that is used to encrypt the message body and create a message authentication code or tag. Using (606), by the first wireless component (601), a first session key shared with a second wireless component of the BMS, to encrypt the message body may be carried out by using a deterministic algorithm (e.g., Galois/Counter Mode (GCM) or Advanced Encryption Standard (AES) CCM (counter with cipher block chaining message authentication code) to encrypt the message body.

The method of FIG. 6 also includes generating (608), by the first wireless component (601), a message authentication code based on the encrypted message body and the first session key. Generating (608), by the first wireless component (601), a message authentication code based on the encrypted message body and the first session key may be carried out by using a deterministic algorithm (e.g., Galois/Counter Mode (GCM) or Advanced Encryption Standard (AES) CCM (counter with cipher block chaining message authentication code) to produce an authentication tag that can be used to verify the integrity of the data.

The method of FIG. 6 also includes transmitting (610) to the second wireless component, by the first wireless component (601), a message that includes the encrypted message body and the message authentication tag. Transmitting (610) to the second wireless component, by the first wireless component (601), a message that includes the encrypted message body and the message authentication tag may be carried out by sending the message as a wireless signal to the second wireless component.

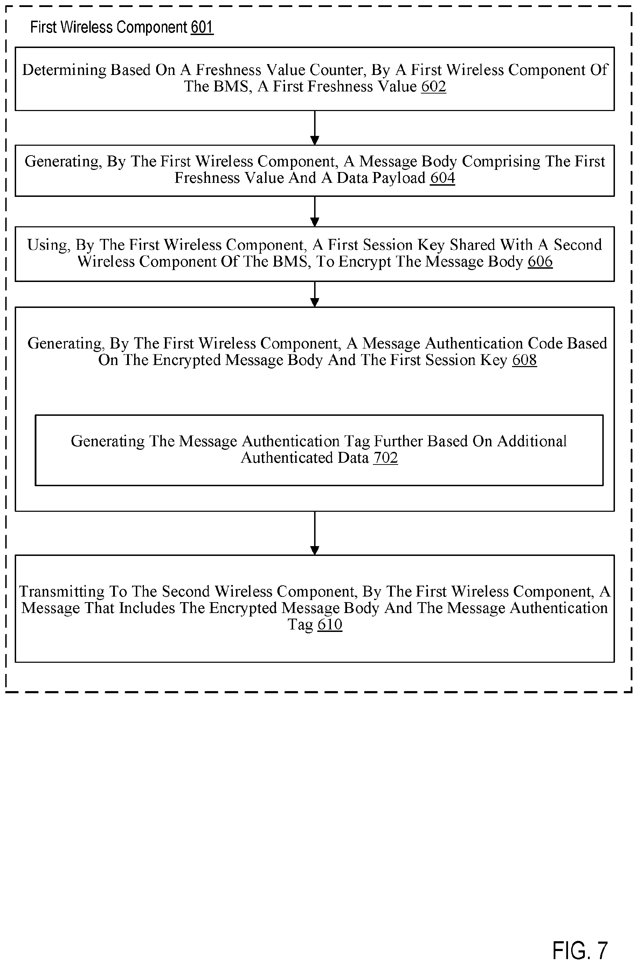

For further explanation, FIG. 7 sets forth a flowchart to illustrate an implementation of a method for using a secure wireless protocol within a wireless battery management system according to at least one embodiment of the present invention. The method of FIG. 7 is similar to the method of FIG. 6 in that the method of FIG. 7 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

In the method of FIG. 7, generating (608), by the first wireless component (601), a message authentication code based on the encrypted message body and the first session key includes generating (702) the message authentication tag further based on Additional Authenticated Data (AAD). AAD may be any string or data structure that is non-encrypted and passed along with the encrypted data. In a particular embodiment, the AAD may include a message header that specifies an identification of the MMS or a wireless subnet. For example, each MMS may have a unique serial number programmed into it during manufacture. During the battery pack configuration process while the WNC is forming the network, each MMS may be allocated a sequential identification (e.g., a logical address). A wireless subnet ID may identify the network used in the communication. This enables multiple networks to co-exist by filtering and rejecting messages which are not on the same subnet ID. In a particular embodiment, the message header is sent as plaintext (i.e., not encrypted). Generating (702) the message authentication tag further based on Additional Authenticated Data (AAD) may be carried out by using the information within the message header to calculate the message authentication tag.

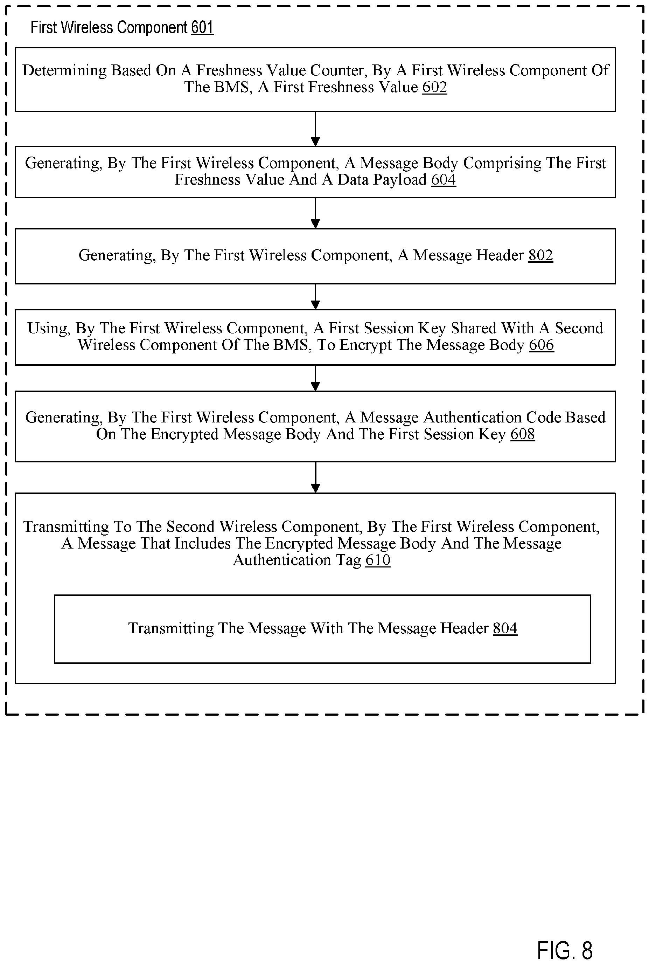

For further explanation, FIG. 8 sets forth a flowchart to illustrate an implementation of a method for using a secure wireless protocol within a wireless battery management system according to at least one embodiment of the present invention. The method of FIG. 8 is similar to the method of FIG. 6 in that the method of FIG. 8 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

The method of FIG. 8 includes generating (802), by the first wireless component (601), a message header. Generating (802), by the first wireless component (601), a message header may be carried out by including the identification of the transmitting component (e.g., the MMS) and the network information (e.g., the subnet) within a message header.

In the method of FIG. 8, transmitting (610) to the second wireless component, by the first wireless component (601), a message that includes the encrypted message body and the message authentication tag includes transmitting (804) the message with the message header. In a particular embodiment, the message header includes at least one of a logical address assigned to the first wireless component and a wireless subnet ID identifying a wireless subnet identifying a wireless subnet that includes the first wireless component. Transmitting (804) the message with the message header may be carried out by transmitting the message header in plaintext as a wireless signal.

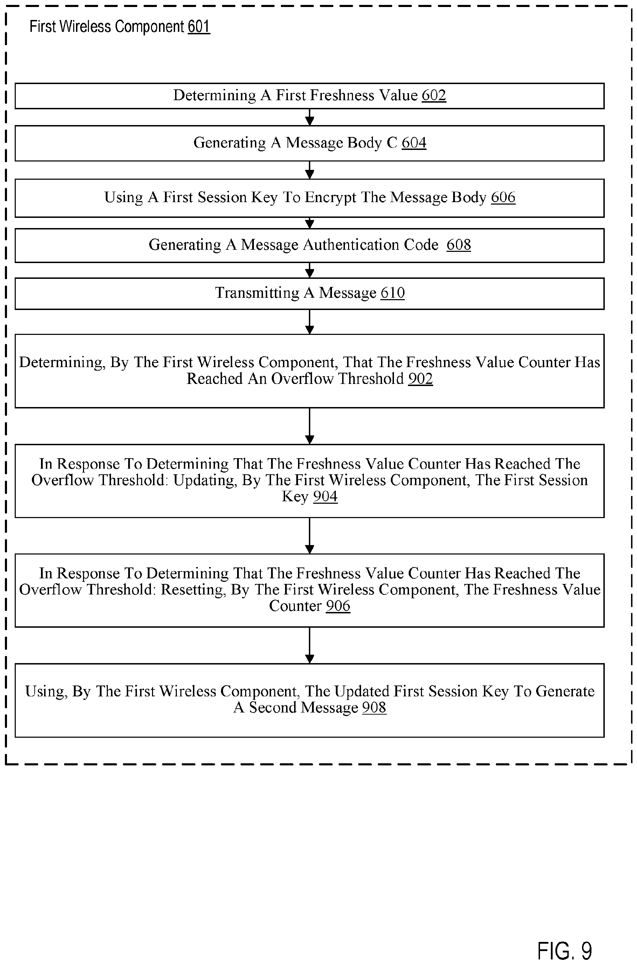

For further explanation, FIG. 9 sets forth a flowchart to illustrate an implementation of a method for using a secure wireless protocol within a wireless battery management system according to at least one embodiment of the present invention. The method of FIG. 9 is similar to the method of FIG. 6 in that the method of FIG. 9 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

The method of FIG. 9 includes determining (902), by the first wireless component (901), that the freshness value counter has reached an overflow threshold. Determining (902), by the first wireless component (601), that the freshness value counter has reached an overflow threshold may be carried out by determining that the counter has reached a max bit count.

The method of FIG. 9 also includes in response to determining that the freshness value counter has reached the overflow threshold, updating (904), by the first wireless component (601), the first session key. Updating (904), by the first wireless component (601), the first session key may be carried out by using an algorithm to modify the session key in a deterministic way.

The method of FIG. 9 also includes in response to determining that the freshness value counter has reached the overflow threshold, resetting (906), by the first wireless component (601), the freshness value counter. Resetting (906), by the first wireless component (601), the freshness value counter may be carried out by resetting the counter to a predetermined starting value (e.g., zero).

The method of FIG. 9 also includes using (908), by the first wireless component (601), the updated first session key to generate a second message. Using (908), by the first wireless component (601), the updated first session key to generate a second message may be carried out by using the updated session key to encrypt a message body of a message; generating a message authentication code based on the encrypted message body and the updated session key; and transmitting a message that includes the encrypted message body and the message authentication tag.

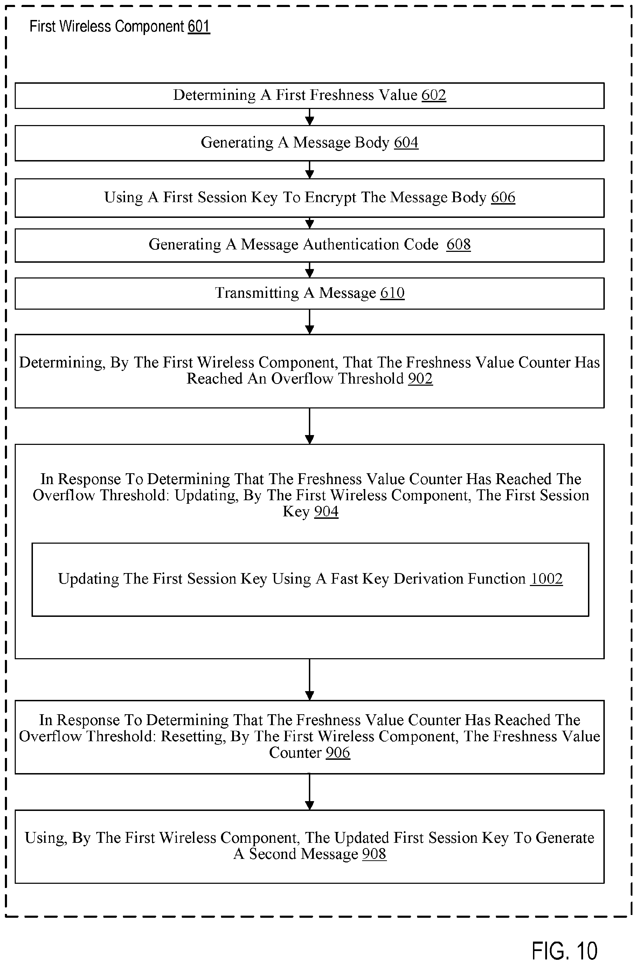

For further explanation, FIG. 10 sets forth a flowchart to illustrate an implementation of a method for using a secure wireless protocol within a wireless battery management system according to at least one embodiment of the present invention. The method of FIG. 10 is similar to the method of FIG. 9 in that the method of FIG. 10 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag; determining (902), by the first wireless component (901), that the freshness value counter has reached an overflow threshold; in response to determining that the freshness value counter has reached the overflow threshold, updating (904), by the first wireless component (601), the first session key; and resetting (906), by the first wireless component (601), the freshness value counter; and using (908), by the first wireless component (601), the updated first session key to generate a second message.

In the method of FIG. 10, in response to determining that the freshness value counter has reached the overflow threshold, updating (904), by the first wireless component (601), the first session key includes updating (1002) the first session key using a fast key derivation function (KDF). Updating (1002) the first session key using a fast key derivation function (KDF) may be carried out by using a fast KDF, which may be based on hash functions or block ciphers such as AES, to modify the session key in a deterministic way.

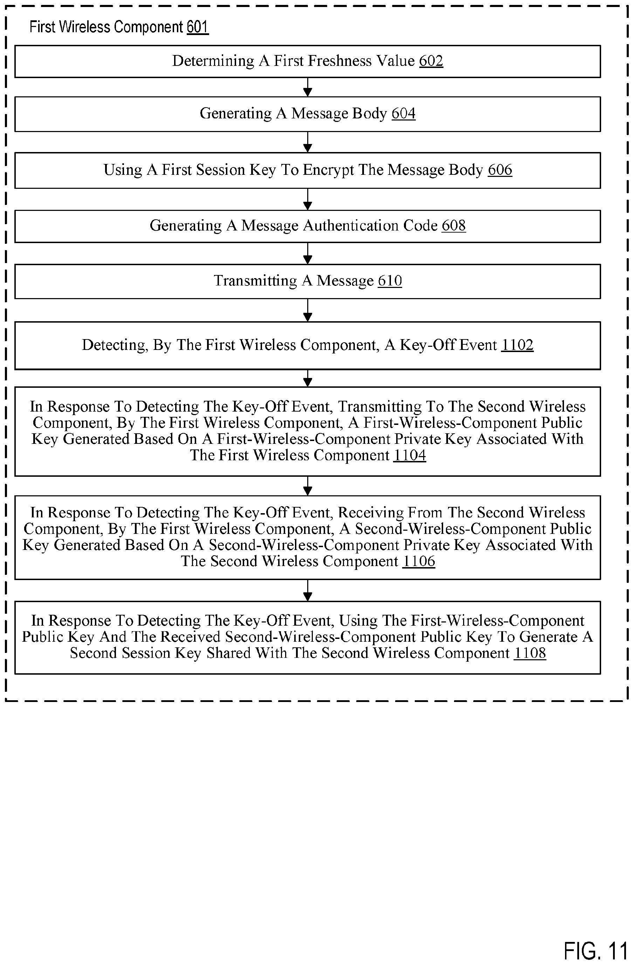

For further explanation, FIG. 11 sets forth a flowchart to illustrate an implementation of a method for using a secure wireless protocol within a wireless battery management system according to at least one embodiment of the present invention. The method of FIG. 11 is similar to the method of FIG. 6 in that the method of FIG. 11 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

The method of FIG. 11 includes detecting (1102), by the first wireless component (601), a key-off event. A key-off event may be an event in which the key to an electric vehicle is turned off but the BMS is not powered down. Detecting (1102), by the first wireless component (601), a key-off event may be carried out by receiving an indication that the ignition has been turned off or receiving an indication that a key-off procedure is being started.

In addition, the method of FIG. 11 also includes in response to detecting the key-off event: transmitting (1104) to the second wireless component, by the first wireless component (601), a first-wireless-component public key generated based on a first-wireless-component private key associated with the first wireless component. A first-wireless-component public key may be a public key that is generated based on a private key assigned to the first wireless component. For example, an approach based on Elliptic Curve Diffie Hellman (ECDH) may be used to generate a public key that may be transmitted using an unsecured channel to a second wireless component. Transmitting (1104) to the second wireless component, by the first wireless component (601), a first-wireless-component public key generated based on a first-wireless-component private key associated with the first wireless component may be carried out by transmitting the public key as a wireless signal.

The method of FIG. 11 also includes in response to detecting the key-off event: receiving (1106) from the second wireless component, by the first wireless component (601), a second-wireless-component public key generated based on a second-wireless-component private key associated with the second wireless component. A second-wireless-component public key may be a public key that is generated based on a private key assigned to the second wireless component. For example, an approach based on Elliptic Curve Diffie Hellman (ECDH) may be used to generate a public key that may be transmitted using an unsecured channel to the first wireless component. Receiving (1106) from the second wireless component, by the first wireless component (601), a second-wireless-component public key generated based on a second-wireless-component private key associated with the second wireless component may be carried out by receiving the public key as a wireless signal.

The method of FIG. 11 also includes in response to detecting the key-off event: using (1108) the first-wireless-component public key and the received second-wireless-component public key to generate a second session key shared with the second wireless component. Using (1108) the first-wireless-component public key and the received second-wireless-component public key to generate a second session key shared with the second wireless component may be carried out by inputting the first-wireless-component public key and the received second-wireless-component public key into ECDH algorithm to generate a new session key. The second wireless component may also input the first-wireless-component public key and the second-wireless-component public key into the same algorithm to generate the same new session key. That is, both the first wireless component and the second wireless component share the same new session key.

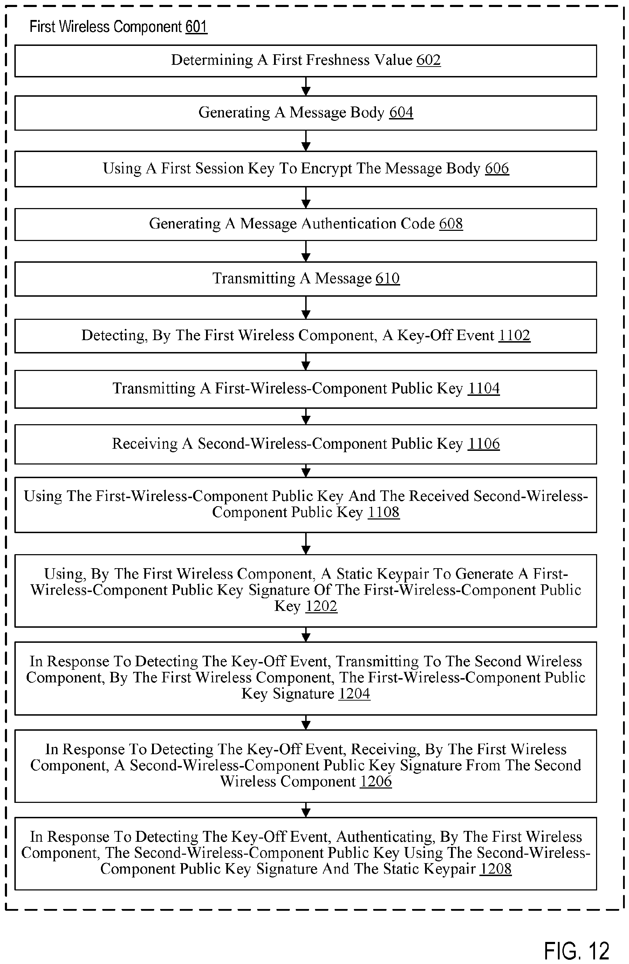

For further explanation, FIG. 12 sets forth a flowchart to illustrate an implementation of a method for using a secure wireless protocol within a wireless battery management system according to at least one embodiment of the present invention. The method of FIG. 12 is similar to the method of FIG. 11 in that the method of FIG. 12 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag; detecting (1102), by the first wireless component (601), a key-off event; in response to detecting the key-off event: transmitting (1104) to the second wireless component, by the first wireless component (601), a first-wireless-component public key generated based on a first-wireless-component private key associated with the first wireless component; receiving (1106) from the second wireless component, by the first wireless component (601), a second-wireless-component public key generated based on a second-wireless-component private key associated with the second wireless component; and using (1108) the first-wireless-component public key and the received second-wireless-component public key to generate a second session key shared with the second wireless component.

The method of FIG. 12 includes using (1202), by the first wireless component (601), a static keypair to generate a first-wireless-component public key signature of the first-wireless-component public key. A static keypair may be a pair of keys that are preloaded onto the MMS and the WNC. A sending wireless component may use the static keypair to generate a signature of the public key and the receiving wireless component may use the static keypair on the received signature to generate the public key. If the static keypair generates a public key that matches the received public key, then the receiving component may authenticate the public key. Using (1202), by the first wireless component (601), a static keypair to generate a first-wireless-component public key signature of the first-wireless-component public key may be carried out by inputting the public key into an algorithm with the static keypair to produce a signature.

In addition, the method of FIG. 12 also includes in response to detecting the key-off event, transmitting (1204) to the second wireless component, by the first wireless component (601), the first-wireless-component public key signature. Transmitting (1204) to the second wireless component, by the first wireless component (601), the first-wireless-component public key signature may be carried out by transmitting the first-wireless-component public key signature as a wireless signal.

The method of FIG. 12 also in response to detecting the key-off event: receiving (1206), by the first wireless component (601), a second-wireless-component public key signature from the second wireless component. Receiving (1206), by the first wireless component (601), a second-wireless-component public key signature from the second wireless component may be carried out by receiving the public key as a wireless signal.

The method of FIG. 12 also includes in response to detecting the key-off event, authenticating (1208), by the first wireless component (601), the second-wireless-component public key using the second-wireless-component public key signature and the static keypair. Authenticating (1208), by the first wireless component (601), the second-wireless-component public key using the second-wireless-component public key signature and the static keypair may be carried out by inputting the signature into an algorithm with the static keypair to generate a result; comparing the result with the received public key; and determining that the received public key is authentic if it matches the result generated by inputting the signature into the algorithm with the static keypair.

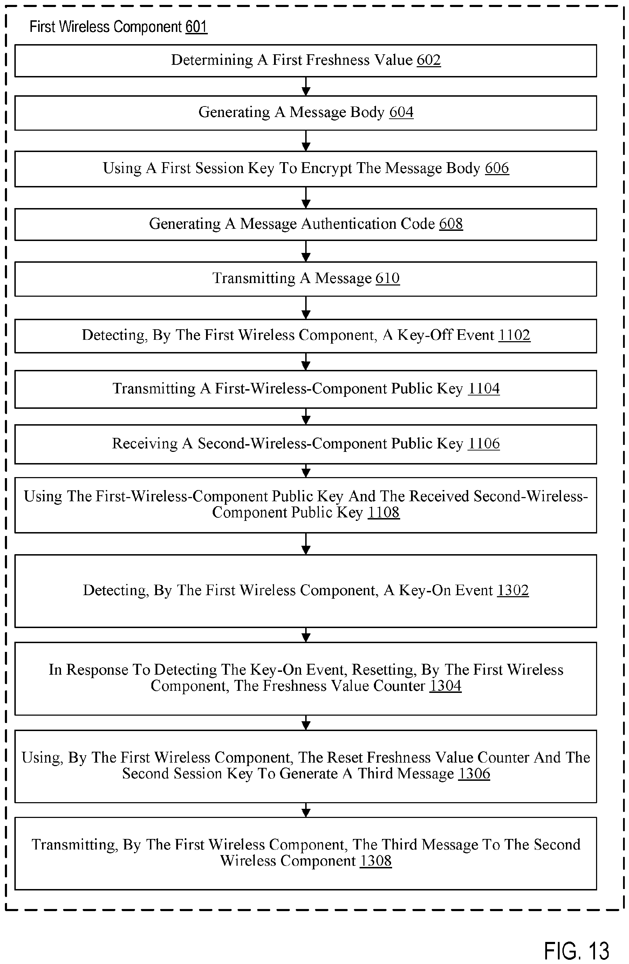

For further explanation, FIG. 13 sets forth a flowchart to illustrate an implementation of a method for using a secure wireless protocol within a wireless battery management system according to at least one embodiment of the present invention. The method of FIG. 13 is similar to the method of FIG. 11 in that the method of FIG. 13 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag; detecting (1102), by the first wireless component (601), a key-off event; in response to detecting the key-off event: transmitting (1104) to the second wireless component, by the first wireless component (601), a first-wireless-component public key generated based on a first-wireless-component private key associated with the first wireless component; receiving (1106) from the second wireless component, by the first wireless component (601), a second-wireless-component public key generated based on a second-wireless-component private key associated with the second wireless component; and using (1108) the first-wireless-component public key and the received second-wireless-component public key to generate a second session key shared with the second wireless component.

The method of FIG. 13 includes detecting (1302), by the first wireless component (1301), a key-on event. A key-on event may be an event in which a system that uses the battery is turned on (e.g., the ignition of an electric vehicle is turned on). Detecting (1302), by the first wireless component (1301), a key-on event may be carried out by receiving an indication that the ignition of an electric vehicle has been turned on; receiving an indication that the key-on event process has started.

In addition, the method of FIG. 13 includes in response to detecting the key-on event, resetting (1304), by the first wireless component (1301), the freshness value counter. Resetting (1304), by the first wireless component (1301), the freshness value counter may be carried out by changing the counter to a predetermined number (e.g., zero).

The method of FIG. 13 includes using (1306), by the first wireless component (1301), the reset freshness value counter and the second session key to generate a third message. Using (1306), by the first wireless component (1301), the reset freshness value counter and the second session key to generate a third message may be carried out by using the second session key to encrypt a message body of a message; and generating a message authentication code based on the encrypted message body and the second session key.

In addition, the method of FIG. 13 includes transmitting (1308), by the first wireless component (1301), the third message to the second wireless component. Transmitting (1308), by the first wireless component (1301), the third message to the second wireless component may be carried out by sending the third message as a wireless signal.

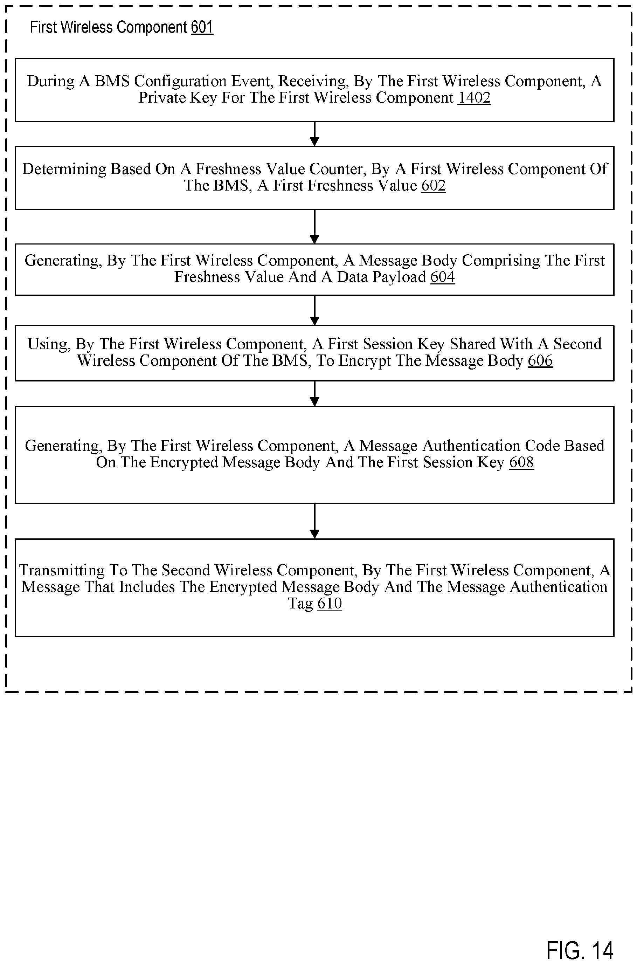

For further explanation, FIG. 14 sets forth a flowchart to illustrate an implementation of a method for using a secure wireless protocol within a wireless battery management system according to at least one embodiment of the present invention. The method of FIG. 14 is similar to the method of FIG. 6 in that the method of FIG. 14 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

The method of FIG. 14 includes during a BMS configuration event, receiving (1402), by the first wireless component (601), a private key for the first wireless component. Receiving (1402), by the first wireless component (601), a private key for the first wireless component may be carried out by loading the private key into the first wireless component at a factory or battery pack assembly station.

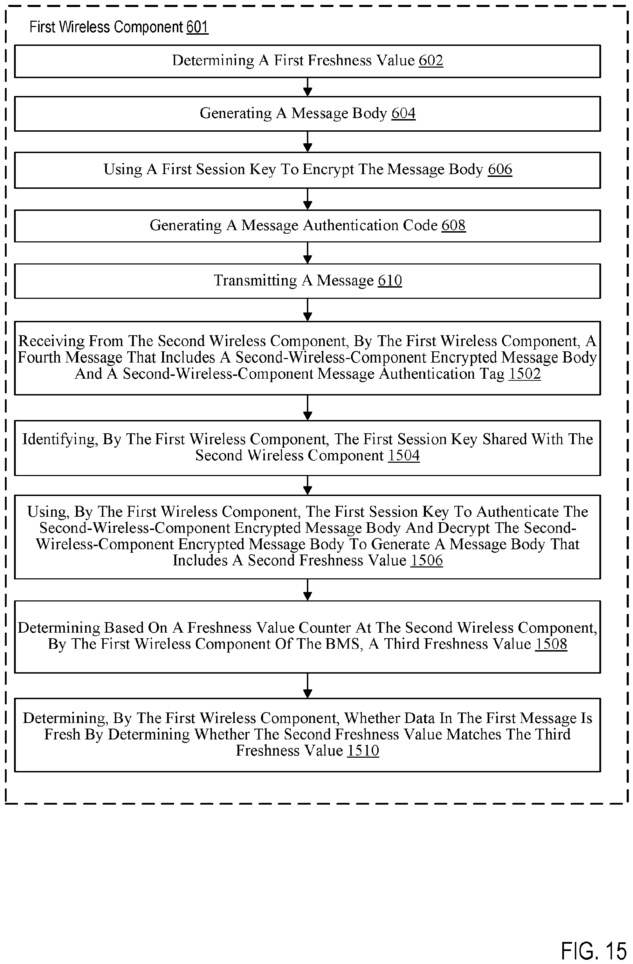

For further explanation, FIG. 15 sets forth a flowchart to illustrate an implementation of a method for using a secure wireless protocol within a wireless battery management system according to at least one embodiment of the present invention. The method of FIG. 15 is similar to the method of FIG. 6 in that the method of FIG. 15 also includes determining (602) based on a freshness value counter, by a first wireless component (601) of the BMS, a first freshness value; generating (604), by the first wireless component (601), a message body comprising the first freshness value and a data payload; using (606), by the first wireless component (601), a first session key shared with a second wireless component of the BMS, to encrypt the message body; generating (608), by the first wireless component (601), a message authentication code based on the encrypted message body and the first session key; and transmitting (610) to the second wireless component, by the first wireless component (601), a message that includes the encrypted message body and the message authentication tag.

The method of FIG. 15 includes receiving (1502) from the second wireless component, by the first wireless component (601), a fourth message that includes a second-wireless-component encrypted message body and a second-wireless-component message authentication tag. Receiving (1502) from the second wireless component, by the first wireless component (601), a fourth message that includes a second-wireless-component encrypted message body and a second-wireless-component message authentication tag may be carried out by receiving the fourth message via a wireless signal.

The method of FIG. 15 includes identifying (1504), by the first wireless component (601), the first session key shared with the second wireless component. Identifying (1504), by the first wireless component (601), the first session key shared with the second wireless component may be carried out by examining a message header to locate the identification of the transmitting wireless component and determining which session key is associated with the identification of the transmitting wireless component.

In addition, the method of FIG. 15 also includes using (1506), by the first wireless component (601), the first session key to authenticate the second-wireless-component encrypted message body and decrypt the second-wireless-component encrypted message body to generate a message body that includes a second freshness value. Using (1506), by the first wireless component (601), the first session key to authenticate the second-wireless-component encrypted message body and decrypt the second-wireless-component encrypted message body to generate a message body that includes a second freshness value may be carried out by using a deterministic algorithm (e.g., Galois/Counter Mode (GCM) or Advanced Encryption Standard (AES) CCM (counter with cipher block chaining message authentication code) to decrypt the message body and authenticate the authentication tag with the first session key.

The method of FIG. 15 also includes determining (1508) based on a freshness value counter at the second wireless component, by the first wireless component (601) of the BMS, a third freshness value. Determining (1508) based on a freshness value counter at the second wireless component, by the second wireless component of the BMS, a third freshness value may be carried out by retrieving a value from a freshness counter that is incremented for each message.

In addition, the method of FIG. 15 includes determining (1510), by the first wireless component (601), whether data in the first message is fresh by determining whether the second freshness value matches the third freshness value. Determining (1510), by the first wireless component (601), whether data in the first message is fresh by determining whether the second freshness value matches the third freshness value may be carried out by comparing the second freshness value to the third freshness value.

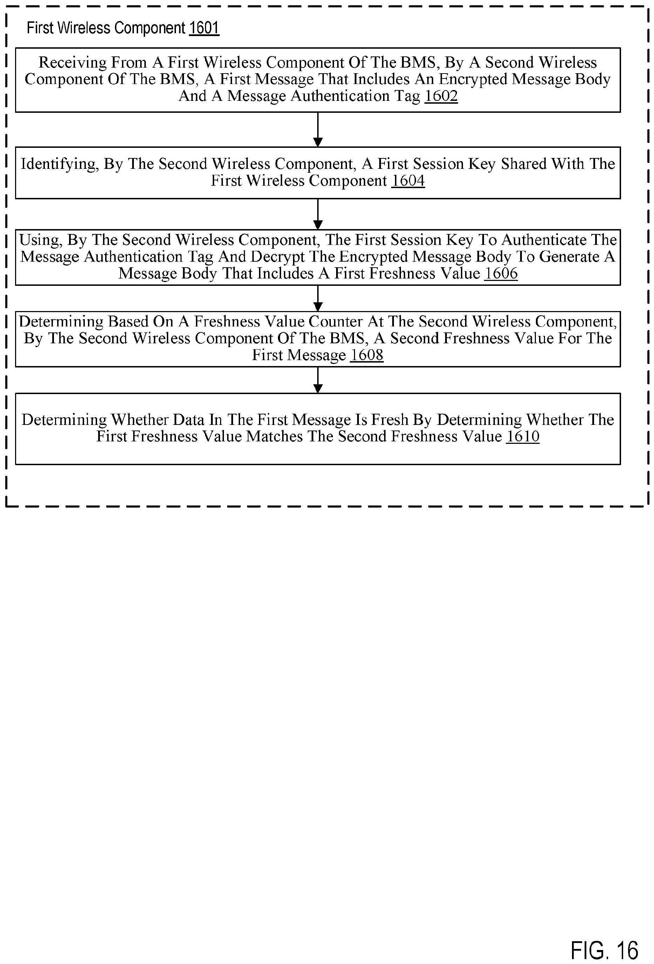

For further explanation, FIG. 16 sets forth a flowchart to illustrate an implementation of a method for using a secure wireless protocol within a wireless battery management system according to at least one embodiment of the present invention. The method of FIG. 16 includes receiving (1602) from a first wireless component of the BMS, by a second wireless component (1601) of the BMS, a first message that includes an encrypted message body and a message authentication tag. Receiving (1602) from a first wireless component of the BMS, by a second wireless component (1601) of the BMS, a first message that includes an encrypted message body and a message authentication tag may be carried out by receiving the message via a wireless signal.

The method of FIG. 16 also includes identifying (1604), by the second wireless component (1601), a first session key shared with the first wireless component. Identifying (1604), by the second wireless component (1601), a first session key shared with the first wireless component may be carried out by examining a message header to locate the identification of the transmitting wireless component and determining which session key is associated with the identification of the transmitting wireless component.

In addition, the method of FIG. 16 also includes using (1606), by the second wireless component (1601), the first session key to authenticate the message authentication tag and decrypt the encrypted message body to generate a message body that includes a first freshness value. Using (1606), by the second wireless component (1601), the first session key to authenticate the message authentication tag and decrypt the encrypted message body to generate a message body that includes a first freshness value may be carried out by using a deterministic algorithm (e.g., Galois/Counter Mode (GCM) or Advanced Encryption Standard (AES) CCM (counter with cipher block chaining message authentication code) to decrypt the message body and authenticate the authentication tag with the first session key.

The method of FIG. 16 includes determining (1608) based on a freshness value counter at the second wireless component, by the second wireless component (1601) of the BMS, a second freshness value for the first message. Determining (1608) based on a freshness value counter at the second wireless component, by the second wireless component (1601) of the BMS, a second freshness value for the first message may be carried out by retrieving a value from a freshness counter that is incremented for each message.

In addition, determining (1610), by the second wireless component (1601), whether data in the first message is fresh by determining whether the first freshness value matches the second freshness value. Determining (1610), by the second wireless component (1601), whether data in the first message is fresh by determining whether the first freshness value matches the second freshness value may be carried out by comparing the first freshness value to the second freshness value.

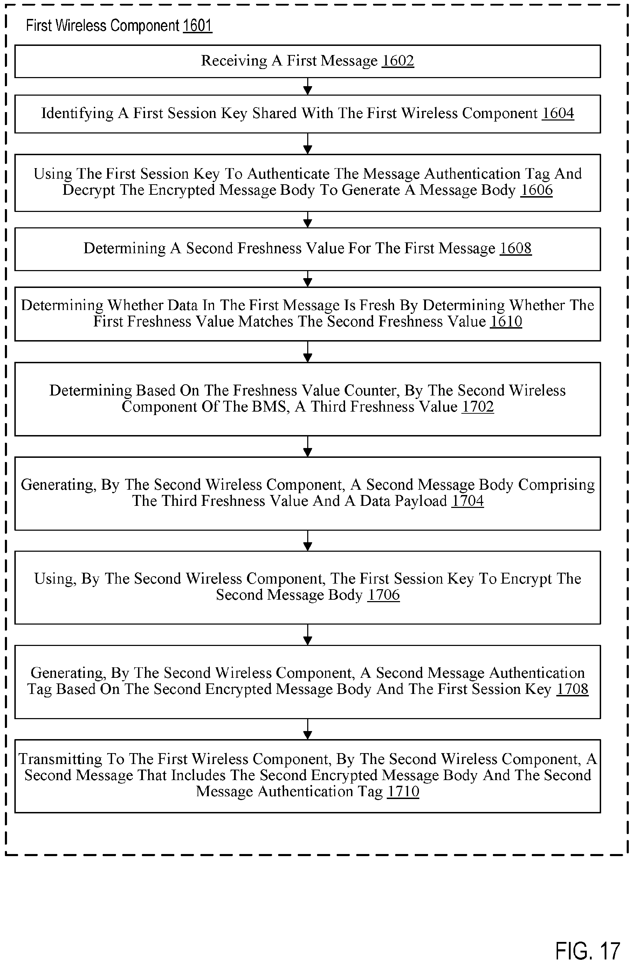

For further explanation, FIG. 17 sets forth a flowchart to illustrate an implementation of a method for using a secure wireless protocol within a wireless battery management system according to at least one embodiment of the present invention. The method of FIG. 17 is similar to the method of FIG. 16 in that the method of FIG. 17 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value.

The method of FIG. 17 includes determining (1702) based on the freshness value counter, by the second wireless component (1601) of the BMS, a third freshness value. Determining (1702) based on the freshness value counter, by the second wireless component (1601) of the BMS, a third freshness value may be carried out by retrieving a value from a freshness counter that is incremented for each message.

In addition, the method of FIG. 17 includes generating (1704), by the second wireless component (1601), a second message body comprising the third freshness value and a data payload. Depending on whether the first wireless component is a MMS or a WNC, the data payload may include instructions for a MMS or responses from the MMS. In a particular embodiment in which the first wireless component is a MMS, the data payload includes sensor readings of characteristics (e.g., voltage, temperature) of the cells in the battery. Generating (1704), by the second wireless component (1601), a second message body comprising the third freshness value and a data payload may be carried out by positioning the first freshness value and the data payload together.

The method of FIG. 17 includes using (1706), by the second wireless component (1601), the first session key to encrypt the second message body. A session key is a key that is used to encrypt the message body and create a message authentication code or tag. Using (1706), by the second wireless component (1601), the first session key to encrypt the second message body may be carried out by using a deterministic algorithm (e.g., Galois/Counter Mode (GCM) or Advanced Encryption Standard (AES) CCM (counter with cipher block chaining message authentication code) to encrypt the message body.

The method of FIG. 17 includes generating (1708), by the second wireless component (1601), a second message authentication tag based on the second encrypted message body and the first session key. Generating (1708), by the second wireless component (1601), a second message authentication tag based on the second encrypted message body and the first session key may be carried out by using a deterministic algorithm (e.g., Galois/Counter Mode (GCM) or Advanced Encryption Standard (AES) CCM (counter with cipher block chaining message authentication code) to produce an authentication tag that can be used to verify the integrity of the data.

In addition, the method of FIG. 17 includes transmitting (1710) to the first wireless component, by the second wireless component (1601), a second message that includes the second encrypted message body and the second message authentication tag. Transmitting (1710) to the first wireless component, by the second wireless component (1601), a second message that includes the second encrypted message body and the second message authentication tag may be carried out by sending the message as a wireless signal to the second wireless component.

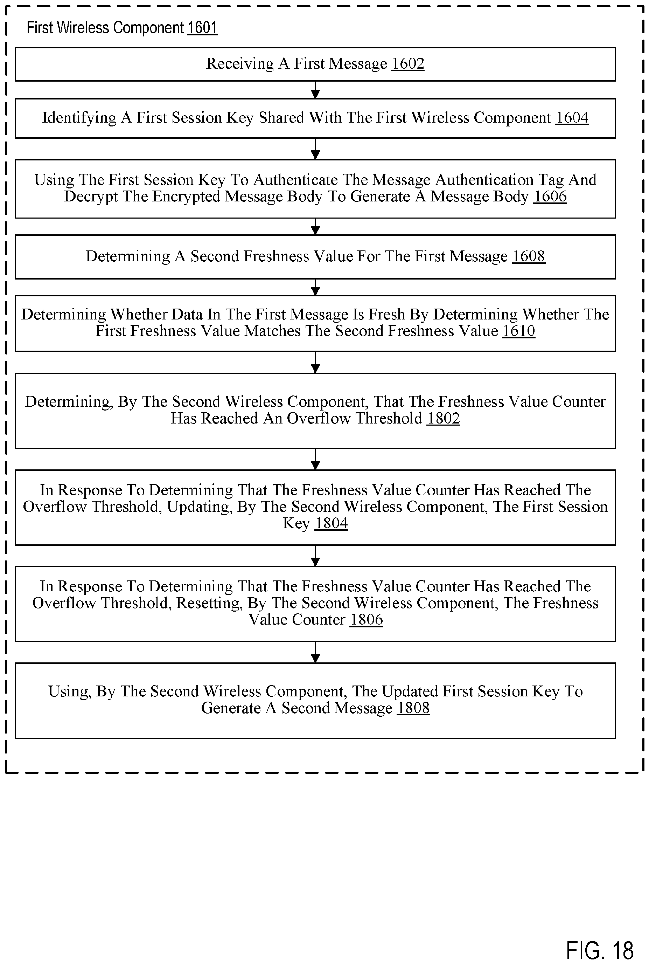

For further explanation, FIG. 18 sets forth a flowchart to illustrate an implementation of a method for using a secure wireless protocol within a wireless battery management system according to at least one embodiment of the present invention. The method of FIG. 18 is similar to the method of FIG. 16 in that the method of FIG. 18 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value.

The method of FIG. 18 includes determining (1802), by the second wireless component (1601), that the freshness value counter has reached an overflow threshold. Determining (1802), by the second wireless component (1601), that the freshness value counter has reached an overflow threshold may be carried out by determining that the counter has reached a max bit count.

The method of FIG. 18 also includes in response to determining that the freshness value counter has reached the overflow threshold, updating (1804), by the second wireless component (1601), the first session key. Updating (1804), by the second wireless component (1601), the first session key may be carried out by using an algorithm to modify the session key in a deterministic way.

In addition, the method of FIG. 18 also includes in response to determining that the freshness value counter has reached the overflow threshold, resetting (1806), by the second wireless component (1601), the freshness value counter. Resetting (1806), by the second wireless component (1601), the freshness value counter may be carried out by resetting the counter to a predetermined starting value (e.g., zero).

The method of FIG. 18 includes using (1808), by the second wireless component (1601), the updated first session key to generate a second message. Using (1808), by the second wireless component (1601), the updated first session key to generate a second message may be carried out by using the updated session key to encrypt a message body of a message; generating a message authentication code based on the encrypted message body and the updated session key; and transmitting a message that includes the encrypted message body and the message authentication tag.

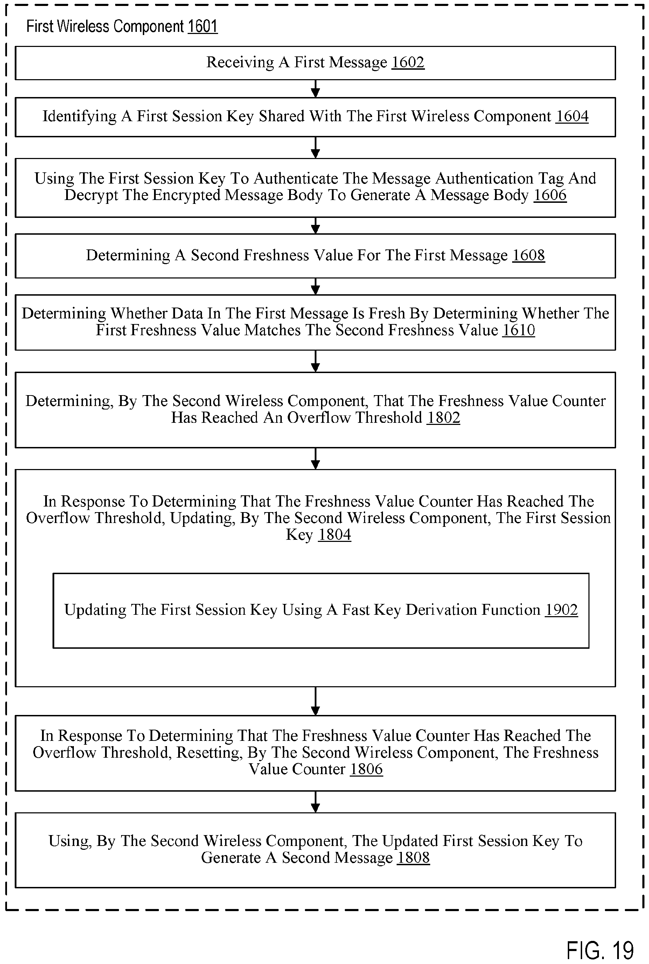

For further explanation, FIG. 19 sets forth a flowchart to illustrate an implementation of a method for using a secure wireless protocol within a wireless battery management system according to at least one embodiment of the present invention. The method of FIG. 19 is similar to the method of FIG. 16 in that the method of FIG. 19 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value; determining (1802), by the second wireless component (1601), that the freshness value counter has reached an overflow threshold; in response to determining that the freshness value counter has reached the overflow threshold, updating (1804), by the second wireless component (1601), the first session key; and resetting (1806), by the second wireless component (1601), the freshness value counter; and using (1808), by the second wireless component (1601), the updated first session key to generate a second message.

In the method of FIG. 19, in response to determining that the freshness value counter has reached the overflow threshold, updating (1804), by the second wireless component (1601), the first session key includes updating (1902) the first session key using a fast key derivation function (KDF). Updating (1902) the first session key using a fast key derivation function (KDF) may be carried out by using a fast KDF, which may be based on hash functions or block ciphers such as AES, to modify the session key in a deterministic way.

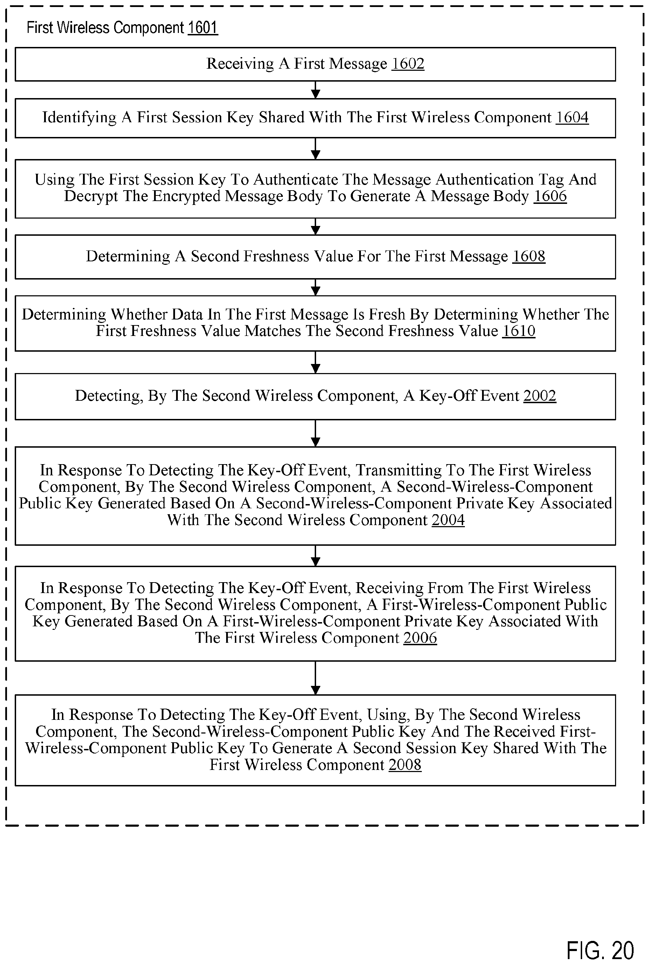

For further explanation, FIG. 20 sets forth a flowchart to illustrate an implementation of a method for using a secure wireless protocol within a wireless battery management system according to at least one embodiment of the present invention. The method of FIG. 20 is similar to the method of FIG. 16 in that the method of FIG. 20 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value.

The method of FIG. 20 includes detecting (2002), by the second wireless component (1601), a key-off event. A key-off event may be an event in which the key to an electric vehicle is turned off but the BMS is not powered down. Detecting (2002), by the second wireless component (1601), a key-off event may be carried out by receiving an indication that the ignition has been turned off or receiving an indication that a key-off procedure is being started.

In addition, the method of FIG. 20 includes in response to detecting the key-off event, transmitting (2004) to the first wireless component, by the second wireless component (1601), a second-wireless-component public key generated based on a second-wireless-component private key associated with the second wireless component. A second-wireless-component public key may be a public key that is generated based on a private key assigned to the second wireless component. For example, an approach based on Elliptic Curve Diffie Hellman (ECDH) may be used to generate a public key that may be transmitted using an unsecured channel to the first wireless component. Transmitting (2004) to the first wireless component, by the second wireless component (1601), a second-wireless-component public key generated based on a second-wireless-component private key associated with the second wireless component may be carried out by transmitting the public key as a wireless signal.

The method of FIG. 20 includes in response to detecting the key-off event, receiving (2006) from the first wireless component, by the second wireless component (1601), a first-wireless-component public key generated based on a first-wireless-component private key associated with the first wireless component. A first-wireless-component public key may be a public key that is generated based on a private key assigned to the first wireless component. For example, an approach based on Elliptic Curve Diffie Hellman (ECDH) may be used to generate a public key that may be transmitted using an unsecured channel to the second wireless component. Receiving (2006) from the first wireless component, by the second wireless component (1601), a first-wireless-component public key generated based on a first-wireless-component private key associated with the first wireless component may be carried out by receiving the public key as a wireless signal.

The method of FIG. 20 includes in response to detecting the key-off event, using (2008), by the second wireless component (1601), the second-wireless-component public key and the received first-wireless-component public key to generate a second session key shared with the first wireless component. Using (2008), by the second wireless component (1601), the second-wireless-component public key and the received first-wireless-component public key to generate a second session key shared with the first wireless component may be carried out by inputting the first-wireless-component public key and the second-wireless-component public key into ECDH algorithm to generate a new session key. The first wireless component may also input the first-wireless-component public key and the second-wireless-component public key into the same algorithm to generate the same new session key. That is, both the first wireless component and the second wireless component share the same new session key.

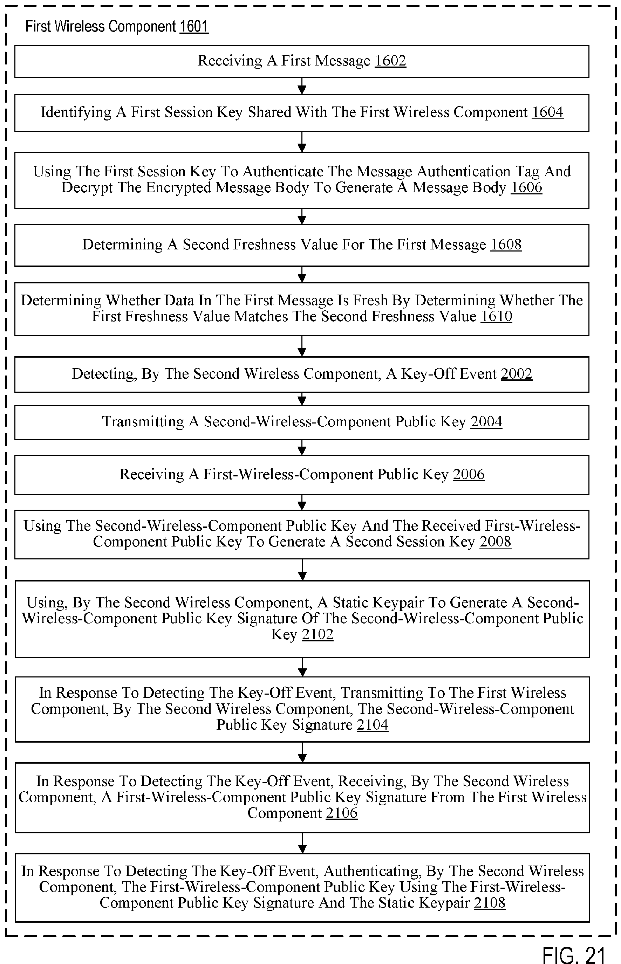

For further explanation, FIG. 21 sets forth a flowchart to illustrate an implementation of a method for using a secure wireless protocol within a wireless battery management system according to at least one embodiment of the present invention. The method of FIG. 21 is similar to the method of FIG. 20 in that the method of FIG. 21 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value; detecting (2002), by the second wireless component (1601), a key-off event; in response to detecting the key-off event, transmitting (2004) to the first wireless component, by the second wireless component (1601), a second-wireless-component public key generated based on a second-wireless-component private key associated with the second wireless component; receiving (2006) from the first wireless component, by the second wireless component (1601), a first-wireless-component public key generated based on a first-wireless-component private key associated with the first wireless component; and using (2008), by the second wireless component (1601), the second-wireless-component public key and the received first-wireless-component public key to generate a second session key shared with the first wireless component.

The method of FIG. 21 includes using (2102), by the second wireless component (1601), a static keypair to generate a second-wireless-component public key signature of the second-wireless-component public key. A static keypair may be a pair of keys that are preloaded onto the MMS and the WNC. A sending wireless component may use the static keypair to generate a signature of the public key and the receiving wireless component may use the static keypair on the received signature to generate the public key. If the static keypair generates a public key that matches the received public key, then the receiving component may authenticate the public key. Using (2102), by the second wireless component (1601), a static keypair to generate a second-wireless-component public key signature of the second-wireless-component public key may be carried out by inputting the public key into an algorithm with the static keypair to produce a signature.

In addition, the method of FIG. 21 includes in response to detecting the key-off event, transmitting (2104) to the first wireless component (1601), by the second wireless component (1601), the second-wireless-component public key signature. Transmitting (2104) to the first wireless component (1601), by the second wireless component (1601), the second-wireless-component public key signature may be carried out by transmitting the first-wireless-component public key signature as a wireless signal.

The method of FIG. 21 includes in response to detecting the key-off event, receiving (2106), by the second wireless component (1601), a first-wireless-component public key signature from the first wireless component. Receiving (2106), by the second wireless component (1601), a first-wireless-component public key signature from the first wireless component may be carried out by receiving the public key as a wireless signal.

The method of FIG. 21 includes in response to detecting the key-off event, authenticating (2108), by the second wireless component (1601), the first-wireless-component public key using the first-wireless-component public key signature and the static keypair. Authenticating (2108), by the second wireless component (1601), the first-wireless-component public key using the first-wireless-component public key signature and the static keypair may be carried out by inputting the signature into an algorithm with the static keypair to generate a result; comparing the result with the received public key; and determining that the received public key is authentic if it matches the result generated by inputting the signature into the algorithm with the static keypair.

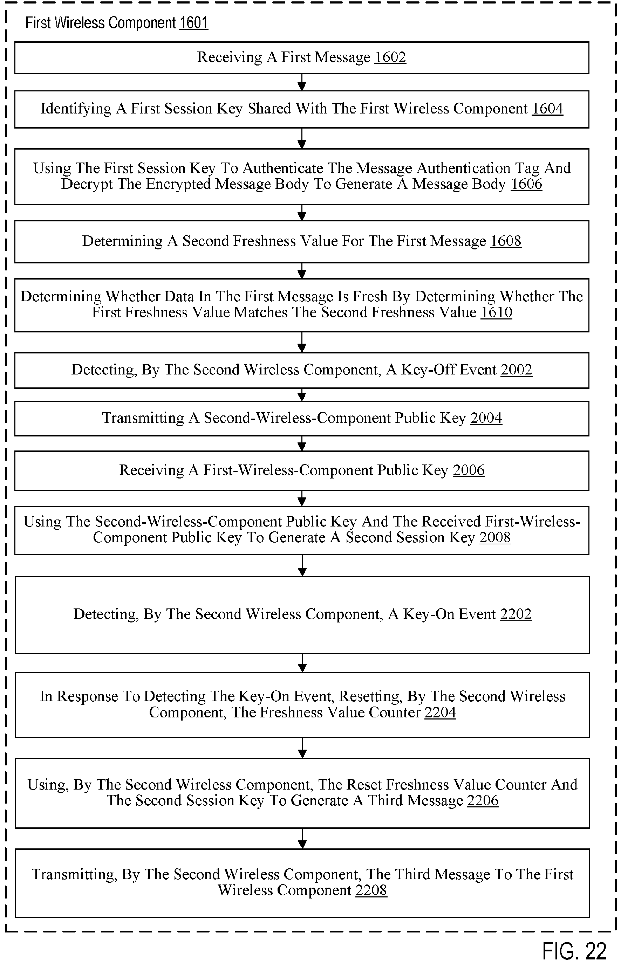

For further explanation, FIG. 22 sets forth a flowchart to illustrate an implementation of a method for using a secure wireless protocol within a wireless battery management system according to at least one embodiment of the present invention. The method of FIG. 22 is similar to the method of FIG. 20 in that the method of FIG. 22 includes receiving (1602) from a first wireless component of the BMS, by a second wireless component (1601) of the BMS, a first message that includes an encrypted message body and a message authentication tag; identifying (1604), by the second wireless component (1601), a first session key shared with the first wireless component; using (1606), by the second wireless component (1601), the first session key to authenticate the message authentication tag and decrypt the encrypted message body to generate a message body that includes a first freshness value; determining (1608) based on a freshness value counter at the second wireless component, by the second wireless component (1601) of the BMS, a second freshness value for the first message; determining (1610), by the second wireless component (1601), whether data in the first message is fresh by determining whether the first freshness value matches the second freshness value; detecting (2002), by the second wireless component (1601), a key-off event; in response to detecting the key-off event, transmitting (2004) to the first wireless component, by the second wireless component (1601), a second-wireless-component public key generated based on a second-wireless-component private key associated with the second wireless component; receiving (2006) from the first wireless component, by the second wireless component (1601), a first-wireless-component public key generated based on a first-wireless-component private key associated with the first wireless component; and using (2008), by the second wireless component (1601), the second-wireless-component public key and the received first-wireless-component public key to generate a second session key shared with the first wireless component.

The method of FIG. 22 includes detecting (2202), by the second wireless component (1601), a key-on event. A key-on event may be an event in which a system that uses the battery is turned on (e.g., the ignition of an electric vehicle is turned on). Detecting (2202), by the second wireless component (1601), a key-on event may be carried out by receiving an indication that the ignition of an electric vehicle has been turned on; and receiving an indication that the key-on event process has started.

In addition, the method of FIG. 22 includes in response to detecting the key-on event, resetting (2204), by the second wireless component (1601), the freshness value counter. Resetting (2204), by the second wireless component (1601), the freshness value counter may be carried out by changing the counter to a predetermined number (e.g., zero).

The method of FIG. 22 includes using (2206), by the second wireless component (1601), the reset freshness value counter and the second session key to generate a third message. Using (2206), by the second wireless component (1601), the reset freshness value counter and the second session key to generate a third message may be carried out by using the second session key to encrypt a message body of a message; generating a message authentication code based on the encrypted message body and the second session key.

The method of FIG. 22 includes transmitting (2208), by the second wireless component (1601), the third message to the first wireless component. Transmitting (2208), by the second wireless component (1601), the third message to the first wireless component may be carried out by sending the third message as a wireless signal.

In view of the explanations set forth above, readers will recognize that the benefits of a secure wireless protocol for wireless sensor networks according to embodiments of the present disclosure include, but are not limited to:
- Improved performance of a wireless sensor network by preventing replay attacks for messages using freshness values and message authentication codes.
- Improved performance of a wireless sensor network by preventing replay attacks by exchanging session keys in response to freshness value overflows.
- Improved performance of a wireless sensor network by preventing man in the middle attacks using authenticated key exchange at the beginning of a session.

Exemplary embodiments of the present invention are described largely in the context of a fully functional computer system for use in a wireless sensor network having a secure wireless protocol. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention may be a system, an apparatus, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible within the scope of the appended claims. The present disclosure is not limited by the particular examples disclosed herein and expressly incorporates these other combinations.

## Claims

1. A method for using a secure wireless protocol within a wireless battery management system (BMS), the method comprising:
determining based on a freshness value counter, by a first wireless component of the BMS, a first freshness value;
generating, by the first wireless component, a message body comprising the first freshness value and a data payload;
using, by the first wireless component, a first session key shared with a second wireless component of the BMS, to encrypt the message body;
generating, by the first wireless component, a message authentication code based on the encrypted message body and the first session key;
transmitting to the second wireless component, by the first wireless component, a message that includes the encrypted message body and a message authentication tag;
receiving from the second wireless component, by the first wireless component, another message that includes a second-wireless-component encrypted message body and a second-wireless-component message authentication tag;
using, by the first wireless component, the first session key to authenticate the second-wireless-component encrypted message body and decrypt the second-wireless-component encrypted message body to generate a message body that includes a second freshness value;
determining based on a freshness value counter at the second wireless component, by the first wireless component of the BMS, a third freshness value; and
determining, by the first wireless component, whether data in the first message is fresh by determining whether the second freshness value matches the third freshness value.

2. The method of claim 1, wherein generating, by the first wireless component, a message authentication code based on the encrypted message body and the first session key includes generating the message authentication tag further based on Additional Authenticated Data (AAD).

3. The method of claim 1 further comprising:
generating, by the first wireless component, a message header; and
wherein transmitting to the second wireless component, by the first wireless component, a message that includes the encrypted message body and the message authentication tag includes transmitting the message with the message header.

4. The method of claim 3, wherein the message header includes at least one of a logical address assigned to the first wireless component and a wireless subnet ID identifying a wireless subnet identifying a wireless subnet that includes the first wireless component.

5. The method of claim 1 further comprising:
determining, by the first wireless component, that the freshness value counter has reached an overflow threshold;
in response to determining that the freshness value counter has reached the overflow threshold:
updating, by the first wireless component, the first session key; and
resetting, by the first wireless component, the freshness value counter; and
using, by the first wireless component, the updated first session key to generate a second message.

6. The method of claim 5, wherein in response to determining that the freshness value counter has reached the overflow threshold, updating, by the first wireless component, the first session key includes updating the first session key using a fast key derivation function (KDF).

7. The method of claim 1, further comprising:
detecting, by the first wireless component, a key-off event; and
in response to detecting the key-off event:
transmitting to the second wireless component, by the first wireless component, a first-wireless-component public key generated based on a first-wireless-component private key associated with the first wireless component;
receiving from the second wireless component, by the first wireless component, a second-wireless-component public key generated based on a second-wireless-component private key associated with the second wireless component; and
using the first-wireless-component public key and the received second-wireless-component public key to generate a second session key shared with the second wireless component.

8. The method of claim 7 further comprising:
using, by the first wireless component, a static keypair to generate a first-wireless-component public key signature of the first-wireless-component public key; and
in response to detecting the key-off event:
transmitting to the second wireless component, by the first wireless component, the first-wireless-component public key signature;
receiving, by the first wireless component, a second-wireless-component public key signature from the second wireless component; and
authenticating, by the first wireless component, the second-wireless-component public key using the second-wireless-component public key signature and the static keypair.

9. The method of claim 7 further comprising:
detecting, by the first wireless component, a key-on event;
in response to detecting the key-on event, resetting, by the first wireless component, the freshness value counter;
using, by the first wireless component, the reset freshness value counter and the second session key to generate a third message; and
transmitting, by the first wireless component, the third message to the second wireless component.

10. The method of claim 1 further comprising during a BMS configuration event, receiving, by the first wireless component, a private key for the first wireless component.

11. A method for using a secure wireless protocol within a wireless battery management system (BMS), the method comprising:
receiving from a first wireless component of the BMS, by a second wireless component of the BMS, a first message that includes an encrypted message body and a message authentication tag;
identifying, by the second wireless component, a first session key shared with the first wireless component;
using, by the second wireless component, the first session key to authenticate the message authentication tag and decrypt the encrypted message body to generate a message body that includes a first freshness value;
determining based on a freshness value counter at the second wireless component, by the second wireless component, a second freshness value for the first message;
determining, by the second wireless component, whether data in the first message is fresh by determining whether the first freshness value matches the second freshness value;
determining based on the freshness value counter, by the second wireless component of the BMS, a third freshness value;
generating, by the second wireless component, a second message body comprising the third freshness value and a data payload;
using, by the second wireless component, the first session key to encrypt the second message body;
generating, by the second wireless component, a second message authentication tag based on the second encrypted message body and the first session key; and
transmitting to the first wireless component, by the second wireless component, a second message that includes the second encrypted message body and the second message authentication tag.

12. The method of claim 12 wherein the first message includes an unencrypted message header indicating at least one of: a wireless sub-net and an identification of the first wireless component.

13. The method of claim 12 further comprising:
determining, by the second wireless component, that the freshness value counter has reached an overflow threshold;
in response to determining that the freshness value counter has reached the overflow threshold:
updating, by the second wireless component, the first session key; and
resetting, by the second wireless component, the freshness value counter; and
using, by the second wireless component, the updated first session key to generate a second message.

14. The method of claim 15, wherein in response to determining that the freshness value counter has reached the overflow threshold, updating, by the second wireless component, the session key includes updating the first session key using a fast key derivation function (KDF).

15. The method of claim 12, further comprising:
detecting, by the second wireless component, a key-off event;
in response to detecting the key-off event:
transmitting to the first wireless component, by the second wireless component, a second-wireless-component public key generated based on a second-wireless-component private key associated with the second wireless component;
receiving from the first wireless component, by the second wireless component, a first-wireless-component public key generated based on a first-wireless-component private key associated with the first wireless component; and
using, by the second wireless component, the second-wireless-component public key and the received first-wireless-component public key to generate a second session key shared with the first wireless component.

## Patentansprüche

1. Verfahren zur Verwendung eines sicheren drahtlosen Protokolls innerhalb eines drahtlosen Batteriemanagementsystems (BMS), wobei das Verfahren umfasst:
Bestimmen eines ersten Frischewerts durch eine erste drahtlose Komponente des BMS, basierend auf einem Frischewertzähler;
Erzeugen eines Nachrichtenkörpers, umfassend den ersten Frischewert und eine Datennutzlast, durch die erste drahtlose Komponente;
Verwenden eines ersten Sitzungsschlüssels durch die erste drahtlose Komponente, der mit einer zweiten drahtlosen Komponente des BMS geteilt wird, um den Nachrichtenkörper zu verschlüsseln;
Erzeugen eines Nachrichtenauthentifizierungscodes durch die erste drahtlose Komponente, basierend auf dem verschlüsselten Nachrichtenkörper und dem ersten Sitzungsschlüssel;
Übertragen einer Nachricht, die den verschlüsselten Nachrichtenkörper und ein Nachrichtenauthentifizierungs-Tag beinhaltet, an die zweite drahtlose Komponente durch die erste drahtlose Komponente;
Empfangen einer weiteren Nachricht von der zweiten drahtlosen Komponente durch die erste drahtlose Komponente, die einen verschlüsselten Nachrichtenkörper der zweiten drahtlosen Komponente und ein Nachrichtenauthentifizierungs-Tag der zweiten drahtlosen Komponente beinhaltet;
Verwenden des ersten Sitzungsschlüssels durch die erste drahtlose Komponente, um den verschlüsselten Nachrichtenkörper der zweiten drahtlosen Komponente zu authentifizieren und den verschlüsselten Nachrichtenkörper der zweiten drahtlosen Komponente zu entschlüsseln, um einen Nachrichtenkörper zu erzeugen, der einen zweiten Frischewert beinhaltet;
Bestimmen eines dritten Frischewertes durch die erste drahtlose Komponente des BMS, basierend auf einem Frischewertzähler an der zweiten drahtlosen Komponente; und Bestimmen, durch die erste drahtlose Komponente, ob Daten in der ersten Nachricht frisch sind, indem bestimmt wird, ob der zweite Frischewert mit dem dritten Frischewert übereinstimmt.

2. Verfahren nach Anspruch 1, wobei das Erzeugen eines Nachrichtenauthentifizierungscodes durch die erste drahtlose Komponente basierend auf dem verschlüsselten Nachrichtenkörper und dem ersten Sitzungsschlüssel ferner das Erzeugen des Nachrichtenauthentifizierungs-Tags basierend auf zusätzlichen authentifizierten Daten (AAD) beinhaltet.

3. Verfahren nach Anspruch 1, ferner umfassend:
Erzeugen eines Nachrichtenkopfes durch die erste drahtlose Komponente; und
wobei das Übertragen einer Nachricht, die den verschlüsselten Nachrichtenkörper und das Nachrichtenauthentifizierungs-Tag beinhaltet, an die zweite drahtlose Komponente durch die erste drahtlose Komponente das Übertragen der Nachricht mit dem Nachrichtenkopf beinhaltet.

4. Verfahren nach Anspruch 3, wobei der Nachrichtenkopf mindestens eine logische Adresse, die der ersten drahtlosen Komponente zugeordnet ist, und eine drahtlose Teilnetz-ID enthält, die ein drahtloses Teilnetz identifiziert, das die erste drahtlose Komponente beinhaltet.

5. Verfahren nach Anspruch 1, ferner umfassend:
Bestimmen, durch die erste drahtlose Komponente, dass der Frischewertzähler einen Überlaufschwellenwert erreicht hat;
als Reaktion auf das Bestimmen, dass der Frischewertzähler den Überlaufschwellenwert erreicht hat:
Aktualisieren des ersten Sitzungsschlüssels durch die erste drahtlose Komponente; und
Zurücksetzen des Frischewertzählers durch die erste drahtlose Komponente; und
Verwenden des aktualisierten ersten Sitzungsschlüssels durch die erste drahtlose Komponente, um eine zweite Nachricht zu erzeugen.

6. Verfahren nach Anspruch 5, wobei in Reaktion auf das Bestimmen, dass der Frischewertzähler den Überlaufschwellenwert erreicht hat, Aktualisieren des ersten Sitzungsschlüssels durch die erste drahtlose Komponente Aktualisieren des ersten Sitzungsschlüssels unter Verwendung einer schnellen Schlüsselableitungsfunktion (KDF) beinhaltet.

7. Verfahren nach Anspruch 1, ferner umfassend:
Erkennen eines Key-Off-Ereignisses durch die erste drahtlose Komponente; und
als Reaktion auf das Erkennen des Key-Off-Ereignisses:
Übertragen eines öffentlichen Schlüssels der ersten drahtlosen Komponente, der basierend auf einem der ersten drahtlosen Komponente zugeordneten privaten Schlüssel der ersten drahtlosen Komponente erzeugt wurde, an die zweite drahtlose Komponente durch die erste drahtlose Komponente;
Empfangen eines öffentlichen Schlüssels der zweiten drahtlosen Komponente durch die erste drahtlose Komponente, der basierend auf einem privaten Schlüssel der zweiten drahtlosen Komponente erzeugt wurde, der mit der zweiten drahtlosen Komponente verbunden ist; und Verwenden des öffentlichen Schlüssels der ersten drahtlosen Komponente und des empfangenen öffentlichen Schlüssels der zweiten drahtlosen Komponente, um einen zweiten Sitzungsschlüssel zu erzeugen, der mit der zweiten drahtlosen Komponente geteilt wird.

8. Verfahren nach Anspruch 7, ferner umfassend:
Verwenden eines statischen Schlüsselpaars durch die erste drahtlose Komponente, um eine Signatur des öffentlichen Schlüssels der ersten drahtlosen Komponente zu erzeugen; und
als Reaktion auf das Erkennen des Key-Off-Ereignisses:
Übertragen der Signatur des öffentlichen Schlüssels der ersten drahtlosen Komponente an die zweite drahtlose Komponente durch die erste drahtlose Komponente;
Empfangen einer Signatur des öffentlichen Schlüssels der zweiten drahtlosen Komponente von der zweiten drahtlosen Komponente durch die erste drahtlose Komponente; und
Authentifizieren des öffentlichen Schlüssels der zweiten drahtlosen Komponente durch die erste drahtlose Komponente unter Verwendung der Signatur des öffentlichen Schlüssels der zweiten drahtlosen Komponente und des statischen Schlüsselpaars.

9. Verfahren nach Anspruch 7, ferner umfassend:
Erkennen eines Key-On-Ereignisses durch die erste drahtlose Komponente;
in Reaktion auf das Erkennen des Key-On-Ereignisses, Zurücksetzen des Frischewertzählers durch die erste drahtlose Komponente;
Verwenden, durch die erste drahtlose Komponente, des zurückgesetzten Frischewertzählers und des zweiten Sitzungsschlüssels, um eine dritte Nachricht zu erzeugen; und Übertragen der dritten Nachricht durch die erste drahtlose Komponente an die zweite drahtlose Komponente.

10. Verfahren nach Anspruch 1, ferner umfassend das Empfangen eines privaten Schlüssels für die erste drahtlose Komponente durch die erste drahtlose Komponente während eines BMS-Konfigurationsereignisses.

11. Verfahren zur Verwendung eines sicheren drahtlosen Protokolls innerhalb eines drahtlosen Batteriemanagementsystems (BMS), wobei das Verfahren umfasst:
Empfangen einer ersten Nachricht, die einen verschlüsselten Nachrichtenkörper und ein Nachrichtenauthentifizierungs-Tag beinhaltet, von einer ersten drahtlosen Komponente des BMS, durch eine zweite drahtlose Komponente des BMS;
Identifizieren eines ersten Sitzungsschlüssels, der mit der ersten drahtlosen Komponente geteilt wird, durch die zweite drahtlose Komponente;
Verwenden des ersten Sitzungsschlüssels durch die zweite drahtlose Komponente, um den Nachrichtenauthentifizierungs-Tag zu authentifizieren und den verschlüsselten Nachrichtenkörper zu entschlüsseln, um einen Nachrichtenkörper zu erzeugen, der einen ersten Frischewert beinhaltet;
Bestimmen eines zweiten Frischewertes für die erste Nachricht durch die zweite drahtlose Komponente, basierend auf einem Frischewertzähler an der zweiten drahtlosen Komponente;
Bestimmen, durch die zweite drahtlose Komponente, ob Daten in der ersten Nachricht frisch sind, indem bestimmt wird, ob der erste Frischewert mit dem zweiten Frischewert übereinstimmt;
Bestimmen eines dritten Frischewerts durch die zweite drahtlose Komponente des BMS, basierend auf dem Frischewertzähler;
Erzeugen eines zweiten Nachrichtenkörpers, umfassend den dritten Frischewert und eine Datennutzlast, durch die zweite drahtlose Komponente;
Verwenden des ersten Sitzungsschlüssels durch die zweite drahtlose Komponente, um den zweiten Nachrichtenkörper zu verschlüsseln;
Erzeugen eines zweiten Nachrichtenauthentifizierungs-Tags durch die zweite drahtlose Komponente, basierend auf dem zweiten verschlüsselten Nachrichtenkörper und dem ersten Sitzungsschlüssel; und
Übertragen einer zweiten Nachricht, die den zweiten verschlüsselten Nachrichtenkörper und das zweite Nachrichtenauthentifizierungs-Tag beinhaltet, an die erste drahtlose Komponente durch die zweite drahtlose Komponente.

12. Verfahren nach Anspruch 12, wobei die erste Nachricht einen unverschlüsselten Nachrichtenkopf beinhaltet, der mindestens eines der folgenden Elemente angibt: ein drahtloses Subnetz und eine Identifikation der ersten drahtlosen Komponente.

13. Verfahren nach Anspruch 12, ferner umfassend:
Bestimmen, durch die zweite drahtlose Komponente, dass der Frischewertzähler einen Überlaufschwellenwert erreicht hat;
als Reaktion auf das Bestimmen, dass der Frischewertzähler den Überlaufschwellenwert erreicht hat:
Aktualisieren des ersten Sitzungsschlüssels durch die zweite drahtlose Komponente; und
Zurücksetzen des Frischewertzählers durch die zweite drahtlose Komponente; und
Verwenden des aktualisierten ersten Sitzungsschlüssels durch die zweite drahtlose Komponente, um eine zweite Nachricht zu erzeugen.

14. Verfahren nach Anspruch 15, wobei in Reaktion auf das Bestimmen, dass der Frischewertzähler den Überlaufschwellenwert erreicht hat, Aktualisieren des ersten Sitzungsschlüssels durch die zweite drahtlose Komponente Aktualisieren des Sitzungsschlüssels unter Verwendung einer schnellen Schlüsselableitungsfunktion (KDF) beinhaltet.

15. Verfahren nach Anspruch 12, ferner umfassend:
Erkennen eines Key-Off-Ereignisses durch die zweite drahtlose Komponente;
als Reaktion auf das Erkennen des Key-Off-Ereignisses:
Übertragen eines öffentlichen Schlüssels der zweiten drahtlosen Komponente, der basierend auf einem der zweiten drahtlosen Komponente zugeordneten privaten Schlüssel der zweiten drahtlosen Komponente erzeugt wurde, an die erste drahtlose Komponente durch die zweite drahtlose Komponente;
Empfangen eines öffentlichen Schlüssels der ersten drahtlosen Komponente, der basierend auf einem der ersten drahtlosen Komponente zugeordneten privaten Schlüssel der ersten drahtlosen Komponente erzeugt wurde, von der ersten drahtlosen Komponente durch die zweite drahtlose Komponente; und
Verwenden des öffentlichen Schlüssels der zweiten drahtlosen Komponente und des empfangenen öffentlichen Schlüssels der ersten drahtlosen Komponente durch die zweite drahtlose Komponente, um einen zweiten Sitzungsschlüssel zu erzeugen, der mit der ersten drahtlosen Komponente geteilt wird.

## Revendications

1. Procédé d'utilisation d'un protocole sans fil sécurisé dans un système de gestion de batterie (BMS) sans fil, le procédé comprenant :
la détermination, sur la base d'un compteur de valeur de fraîcheur, par un premier composant sans fil du BMS, d'une première valeur de fraîcheur ;
la génération, par le premier composant sans fil, d'un corps de message comprenant la première valeur de fraîcheur et une charge utile de données ;
l'utilisation, par le premier composant sans fil, d'une première clé de session partagée avec un second composant sans fil du BMS, pour chiffrer le corps de message ;
la génération, par le premier composant sans fil, d'un code d'authentification de message sur la base du corps de message chiffré et de la première clé de session ;
la transmission au second composant sans fil, par le premier composant sans fil, d'un message qui comporte le corps de message chiffré et une étiquette d'authentification de message ;
la réception, en provenance du second composant sans fil, par le premier composant sans fil, d'un autre message qui comporte un corps de message chiffré de second composant sans fil et une étiquette d'authentification de message de second composant sans fil ;
l'utilisation, par le premier composant sans fil, de la première clé de session pour authentifier le corps de message chiffré de second composant sans fil et déchiffrer le corps de message chiffré de second composant sans fil afin de générer un corps de message qui comporte une deuxième valeur de fraîcheur ;
la détermination, sur la base d'un compteur de valeur de fraîcheur au niveau du second composant sans fil, par le premier composant sans fil du BMS, d'une troisième valeur de fraîcheur ; et
le fait de déterminer, par le premier composant sans fil, si des données dans le premier message sont récentes en déterminant si la deuxième valeur de fraîcheur correspond à la troisième valeur de fraîcheur.

2. Procédé selon la revendication 1, dans lequel la génération, par le premier composant sans fil, d'un code d'authentification de message sur la base du corps de message chiffré et de la première clé de session comporte la génération de l'étiquette d'authentification de message sur la base en outre de données authentifiées supplémentaires (AAD).

3. Procédé selon la revendication 1, comprenant en outre :
la génération, par le premier composant sans fil, d'un en-tête de message ; et
dans lequel la transmission au second composant sans fil, par le premier composant sans fil, d'un message qui comporte le corps de message chiffré et l'étiquette d'authentification de message comporte la transmission du message avec l'en-tête de message.

4. Procédé selon la revendication 3, dans lequel l'en-tête de message comporte au moins l'un d'une adresse logique attribuée au premier composant sans fil et d'un ID de sous-réseau sans fil identifiant un sous-réseau sans fil identifiant un sous-réseau sans fil qui comporte le premier composant sans fil.

5. Procédé selon la revendication 1, comprenant en outre :
la détermination, par le premier composant sans fil, du fait que le compteur de valeur de fraîcheur a atteint un seuil de dépassement ;
en réponse à la détermination du fait que le compteur de valeur de fraîcheur a atteint le seuil de dépassement :
la mise à jour, par le premier composant sans fil, de la première clé de session ; et
la réinitialisation, par le premier composant sans fil, du compteur de valeur de fraîcheur ; et
l'utilisation, par le premier composant sans fil, de la première clé de session mise à jour pour générer un deuxième message.

6. Procédé selon la revendication 5, dans lequel, en réponse à la détermination du fait que le compteur de valeur de fraîcheur a atteint le seuil de dépassement, la mise à jour, par le premier composant sans fil, de la première clé de session comporte la mise à jour de la première clé de session à l'aide d'une fonction de dérivation de clé (KDF) rapide.

7. Procédé selon la revendication 1, comprenant en outre :
la détection, par le premier composant sans fil, d'un événement de désactivation de clé ; et
en réponse à la détection de l'événement de désactivation de clé :
la transmission au second composant sans fil, par le premier composant sans fil, d'une clé publique de premier composant sans fil générée sur la base d'une clé privée de premier composant sans fil associée au premier composant sans fil ;
la réception, en provenance du second composant sans fil, par le premier composant sans fil, d'une clé publique de second composant sans fil générée sur la base d'une clé privée de second composant sans fil associée au second composant sans fil ; et l'utilisation de la clé publique de premier composant sans fil et de la clé publique de second composant sans fil reçue pour générer une seconde clé de session partagée avec le second composant sans fil.

8. Procédé selon la revendication 7 comprenant en outre :
l'utilisation, par le premier composant sans fil, d'une paire de clés statiques pour générer une signature de clé publique de premier composant sans fil de la clé publique de premier composant sans fil ; et
en réponse à la détection de l'événement de désactivation de clé :
la transmission au second composant sans fil, par le premier composant sans fil, de la signature de clé publique de premier composant sans fil ;
la réception, par le premier composant sans fil, d'une signature de clé publique de second composant sans fil en provenance du second composant sans fil ; et
l'authentification, par le premier composant sans fil, de la clé publique de second composant sans fil à l'aide de la signature de clé publique de second composant sans fil et de la paire de clés statiques.

9. Procédé selon la revendication 7 comprenant en outre :
la détection, par le premier composant sans fil, d'un événement d'activation de clé ;
en réponse à la détection de l'événement d'activation de clé, la réinitialisation, par le premier composant sans fil, du compteur de valeur de fraîcheur ;
l'utilisation, par le premier composant sans fil, du compteur de valeur de fraîcheur réinitialisé et de la seconde clé de session pour générer un troisième message ; et
la transmission, par le premier composant sans fil, du troisième message au second composant sans fil.

10. Procédé selon la revendication 1, comprenant en outre, pendant un événement de configuration BMS, la réception, par le premier composant sans fil, d'une clé privée pour le premier composant sans fil.

11. Procédé d'utilisation d'un protocole sans fil sécurisé dans un système de gestion de batterie (BMS) sans fil, le procédé comprenant :
la réception, en provenance d'un premier composant sans fil du BMS, par un second composant sans fil du BMS, d'un premier message qui comporte un corps de message chiffré et une étiquette d'authentification de message ;
l'identification, par le second composant sans fil, d'une première clé de session partagée avec le premier composant sans fil ;
l'utilisation, par le second composant sans fil, de la première clé de session pour authentifier l'étiquette d'authentification de message et déchiffrer le corps de message chiffré afin de générer un corps de message qui comporte une première valeur de fraîcheur ;
la détermination, sur la base d'un compteur de valeur de fraîcheur au niveau du second composant sans fil, par le second composant sans fil, d'une deuxième valeur de fraîcheur pour le premier message ;
le fait de déterminer, par le second composant sans fil, si des données dans le premier message sont récentes en déterminant si la première valeur de fraîcheur correspond à la deuxième valeur de fraîcheur ;
la détermination, sur la base du compteur de valeur de fraîcheur, par le second composant sans fil du BMS, d'une troisième valeur de fraîcheur ;
la génération, par le second composant sans fil, d'un second corps de message comprenant la troisième valeur de fraîcheur et une charge utile de données ;
l'utilisation, par le second composant sans fil, de la première clé de session pour chiffrer le second corps de message ;
la génération, par le second composant sans fil, d'une seconde étiquette d'authentification de message sur la base du second corps de message chiffré et de la première clé de session ; et la transmission au premier composant sans fil, par le second composant sans fil, d'un deuxième message qui comporte le second corps de message chiffré et la seconde étiquette d'authentification de message.

12. Procédé selon la revendication 12, dans lequel le premier message comporte un en-tête de message non chiffré indiquant au moins l'un : d'un sous-réseau sans fil et d'une identification du premier composant sans fil.

13. Procédé selon la revendication 12, comprenant en outre :
la détermination, par le second composant sans fil, du fait que le compteur de valeur de fraîcheur a atteint un seuil de dépassement ;
en réponse à la détermination du fait que le compteur de valeur de fraîcheur a atteint le seuil de dépassement :
la mise à jour, par le second composant sans fil, de la première clé de session ; et
la réinitialisation, par le second composant sans fil, du compteur de valeur de fraîcheur ; et
l'utilisation, par le second composant sans fil, de la première clé de session mise à jour pour générer un deuxième message.

14. Procédé selon la revendication 15, dans lequel, en réponse à la détermination du fait que le compteur de valeur de fraîcheur a atteint le seuil de dépassement, la mise à jour, par le second composant sans fil, de la clé de session comporte la mise à jour de la première clé de session à l'aide d'une fonction de dérivation de clé (KDF) rapide.

15. Procédé selon la revendication 12, comprenant en outre :
la détection, par le second composant sans fil, d'un événement de désactivation de clé ;
en réponse à la détection de l'événement de désactivation de clé :
la transmission au premier composant sans fil, par le second composant sans fil, d'une clé publique de second composant sans fil générée sur la base d'une clé privée de second composant sans fil associée au second composant sans fil ;
la réception, en provenance du premier composant sans fil, par le second composant sans fil, d'une clé publique de premier composant sans fil générée sur la base d'une clé privée de premier composant sans fil associée au premier composant sans fil ; et
l'utilisation, par le second composant sans fil, de la clé publique de second composant sans fil et de la clé publique de premier composant sans fil reçue pour générer une seconde clé de session partagée avec le premier composant sans fil.
